# EUROPEAN PATENT APPLICATION

(11) **EP 4 706 817 A1**
(43) Date of publication of application: **11.03.2026**
(21) Application number: 25195711.4
(22) Date of filing: 13.08.2025
(51) Int. Cl.: B01J 21/00, B01L 3/00, G01N 27/447

(54) **CHIP AND SAMPLE ANALYSIS DEVICE**

(30) Priority: 14.08.2024 CN 202411111438
(71) Applicant: GeneMind Biosciences Company Limited, Shenzhen City, Guangdong 518023 (CN)
(72) Inventor: ZHAO, Lifeng, Shenzhen City, 518023 (CN); WU, Ping, Shenzhen City, 518023 (CN); ZHOU, Zhiliang, Shenzhen City, 518023 (CN)
(74) Representative: Schiweck Weinzierl Koch Patentanwälte Partnerschaft mbB

(57) **Abstract**

The present disclosure discloses a chip and a sample analysis device. The chip includes: a cover plate; a substrate disposed on the cover plate; and an overflow cavity and an electrophoresis channel disposed between the cover plate and the substrate. The overflow cavity is disposed adjacent to the electrophoresis channel. A sample transfer mechanism for loading a sample enters the substrate, and then passes through the overflow cavity and enters the electrophoresis channel. Liquid overflowing from the electrophoresis channel enters the overflow cavity. The overflow cavity can store the liquid overflowing from the electrophoresis channel, thereby preventing the liquid from overflowing the electrophoresis chip, such that effective electrophoresis and imaging on the sample by the electrophoresis mechanism and imaging mechanism in the subsequent process are ensured, while also maintaining stable transfer of the chip during the subsequent chip transfer process, thus preventing biological contamination caused by chip dropping due to slippage.

## Description

### TECHNICAL FIELD

The present disclosure relates to the technical field of biological analysis, and in particular, to a chip and a sample analysis device.

### BACKGROUND

The subject matter discussed in this section should not be regarded as prior art merely as a result of its mention in this section. Similarly, technical problems mentioned in this section or associated with the subject matter provided as background should not be considered as having been previously recognized in the prior art.

Various analyzers that use electrophoretic methods to analyze samples containing DNA, RNA or proteins are available in the market.

The analyzer generally includes a sample loading mechanism, a power supply mechanism, and an optical mechanism. After an electrophoresis chip is placed in the analyzer, the sample loading mechanism loads a sample into the electrophoresis chip, the power supply mechanism supplies power to the electrophoresis chip to achieve electrophoretic separation of the sample, and finally, the optical mechanism captures images of the electrophoresis chip to obtain a sample photo for subsequent analysis. However, during sample loading by the sample loading mechanism, the puncture needle pierces into the internal cavity of the electrophoresis chip. Since this cavity is configured as a sealed cavity filled with buffer solution and gel, the puncture needle may compress the liquid in the cavity, causing it to overflow. In addition, when the sample loading needle delivers the sample into the internal cavity of the electrophoresis chip, the liquid in the cavity may also be compressed to overflow. If the liquid overflows the cavity, the liquid may slide down along the outer surface of the electrophoresis chip. When the power supply mechanism supplies power to the electrophoresis chip in the subsequent process, the power supply mechanism may come into contact with the overflowed liquid, such that the electricity cannot be smoothly transmitted into the cavity to perform electrophoretic separation on the sample in the cavity. In addition, when the optical mechanism captures an image of the electrophoresis chip in the subsequent process, the image may have shadows caused by the overflowed liquid, resulting in poor image quality. Further, when the chip is transferred, the presence of overflowed liquid on the outer surface of the electrophoresis chip increases the probability of dropping due to slippage, thereby posing a risk of biological contamination.

### SUMMARY

To address at least one of the above-mentioned technical problems to at least some extent or to provide a practical commercial means, embodiments of the present disclosure provide a chip and a sample analysis device.

Provided is a chip according to an embodiment of the present disclosure, including:
a cover plate;
a substrate disposed on the cover plate; and
an overflow cavity and an electrophoresis channel disposed between the cover plate and the substrate, where the overflow cavity is disposed adjacent to the electrophoresis channel; a sample transfer mechanism for loading a sample enters the substrate, and then passes through the overflow cavity and enters the electrophoresis channel, and liquid overflowing from the electrophoresis channel enters the overflow cavity. In the chip provided by the embodiments of the present disclosure, the sample transfer mechanism enters the substrate, and then passes through the overflow cavity and enters the electrophoresis channel, and the liquid overflowing from the electrophoresis channel enters the overflow cavity. For example, the puncture needle of the sample transfer mechanism enters the substrate, and then passes through the overflow cavity and enters the electrophoresis channel, and the puncture needle compresses the liquid overflowing from the electrophoresis channel, causing the liquid to enter into the overflow cavity. As another example, the sample loading needle of the sample transfer mechanism enters the substrate, and then passes through the overflow cavity and enters the electrophoresis channel, the sample loading needle loads the sample into the electrophoresis channel, and the sample compresses the liquid overflowing from the electrophoresis channel, causing the liquid to enter into the overflow cavity. The overflow cavity can store the liquid overflowing from the electrophoresis channel, thereby preventing the liquid from overflowing the electrophoresis chip, such that effective electrophoresis and imaging on the sample by the electrophoresis mechanism and the imaging mechanism in the subsequent process are ensured, while also maintaining stable transfer of the chip during the subsequent chip transfer process, thus preventing biological contamination caused by chip dropping due to slippage.

Provided is a sample analysis device according to an embodiment of the present disclosure, including the chip described above. The sample analysis device further includes:
a bottom plate provided with a first cavity;
a chip fixing mechanism disposed on the bottom plate, where the chip fixing mechanism includes at least one analysis station positioned in the first cavity;
a sample transfer mechanism disposed on the bottom plate;
an electrophoresis mechanism and an imaging mechanism disposed on the bottom plate; and a blocking mechanism disposed in the first cavity and corresponding to a position of the analysis station, where the blocking mechanism includes at least one recovery station,
where when the chip is positioned on the analysis station, the chip fixing mechanism secures the chip, the blocking mechanism prevents the chip from falling, the sample transfer mechanism loads a sample into the electrophoresis channel, then the electrophoresis mechanism performs electrophoretic separation on the sample in the electrophoresis channel, the imaging mechanism captures images of the sample, and finally the chip fixing mechanism releases the chip, and the blocking mechanism moves to allow the chip to fall into the recovery station.

Additional aspects and advantages of the embodiments of the present disclosure will be partially set forth in the following description, and will partially become apparent from the following description or be appreciated by practice of the embodiments of the present disclosure.

### BRIEF DESCRIPTION OF THE DRAWINGS

The above and/or additional aspects and advantages of the embodiments of the present disclosure will become apparent and easily understood from the description of the embodiments with reference to the following drawings, among which:
FIG. 1 is a schematic view of a chip according to an embodiment of the present disclosure;
FIG. 2 is an exploded view of a chip according to an embodiment of the present disclosure;
FIG. 3 is a schematic view of a chip from another angle of view according to an embodiment of the present disclosure;
FIG. 4 is a cross-sectional view along the direction A-A shown in FIG. 3 according to an embodiment of the present disclosure;
FIG. 5 is a partially enlarged view of a portion B in FIG. 4 according to an embodiment of the present disclosure;
FIG. 6 is a schematic view of a substrate according to an embodiment of the present disclosure;
FIG. 7 is a schematic view of a substrate from another angle of view according to an embodiment of the present disclosure;
FIG. 8 is a schematic view of a substrate from yet another angle of view according to an embodiment of the present disclosure;
FIG. 9 is a schematic view of a cover plate according to an embodiment of the present disclosure;
FIG. 10 is a schematic view of a sample analysis device according to an embodiment of the present disclosure;
FIG. 11 is a partially enlarged view of a portion C in FIG. 10 according to an embodiment of the present disclosure;
FIG. 12 is another schematic view of a sample analysis device according to an embodiment of the present disclosure;
FIG. 13 is a partially enlarged view of a portion D in FIG. 12 according to an embodiment of the present disclosure;
FIG. 14 is a schematic view of an oscillation module and a centrifuge module according to an embodiment of the present disclosure;
FIG. 15 is a schematic view of a centrifuge module according to an embodiment of the present disclosure;
FIG. 16 is a schematic view of an electrophoresis mechanism and a movable plate according to an embodiment of the present disclosure;
FIG. 17 is a schematic view of a pushing mechanism according to an embodiment of the present disclosure;
FIG. 18 is a bottom schematic view of a sample analysis device according to an embodiment of the present disclosure;
FIG. 19 is a schematic view of a bottom plate according to an embodiment of the present disclosure;
FIG. 20 is a schematic view of a first cavity according to an embodiment of the present disclosure;
FIG. 21 is another schematic view of a sample analysis device according to an embodiment of the present disclosure;
FIG. 22 is a partially enlarged view of a portion E in FIG. 21 according to an embodiment of the present disclosure; and
FIG. 23 is a schematic view of a sample transfer mechanism according to an embodiment of the present disclosure.

### DETAILED DESCRIPTION

The embodiments of the present application are described in detail hereinafter, with examples of the embodiments illustrated in the drawings. The embodiments described below with reference to the drawings are exemplary and are intended to explain the present application, rather than being construed as limiting the present application.

In the process of describing the present application, the terminology herein is explained and illustrated only for the purpose of facilitating an understanding of the solution and is not to be construed as limiting the protection solution of the present application.

As used herein, the singular forms "a", "an", and the like, include plural referents (one or more) unless otherwise indicated; and "a set of" or "a plurality of" refers to two or more.

As used herein, unless otherwise specified, the term "include" or "comprise" is open-ended and does not exclude the inclusion of other contents or situations that are consistent with the stated situations but not listed or exemplified herein.

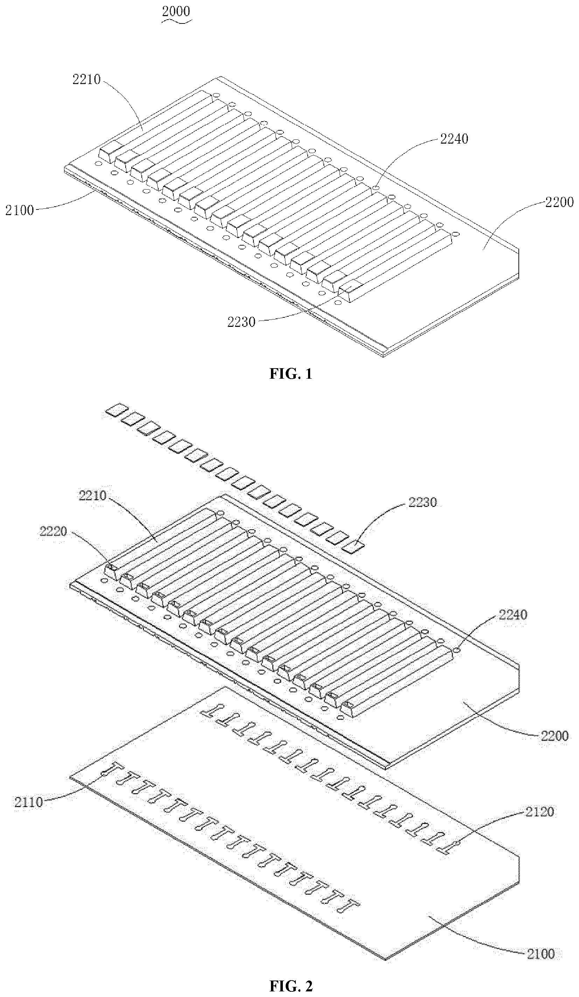

The embodiments of the present disclosure provide a chip 2000. Referring to FIGs. 1 to 4, the chip includes:
a cover plate 2100;
a substrate 2200 disposed on the cover plate 2100; and
an overflow cavity 2250 and an electrophoresis channel 2300 disposed between the cover plate 2100 and the substrate 2200. The overflow cavity 2250 is disposed adjacent to the electrophoresis channel 2300. A sample transfer mechanism 500 for loading a sample enters the substrate 2200, and then passes through the overflow cavity 2250 and enters the electrophoresis channel 2300, and liquid overflowing from the electrophoresis channel 2300 enters the overflow cavity 2250.

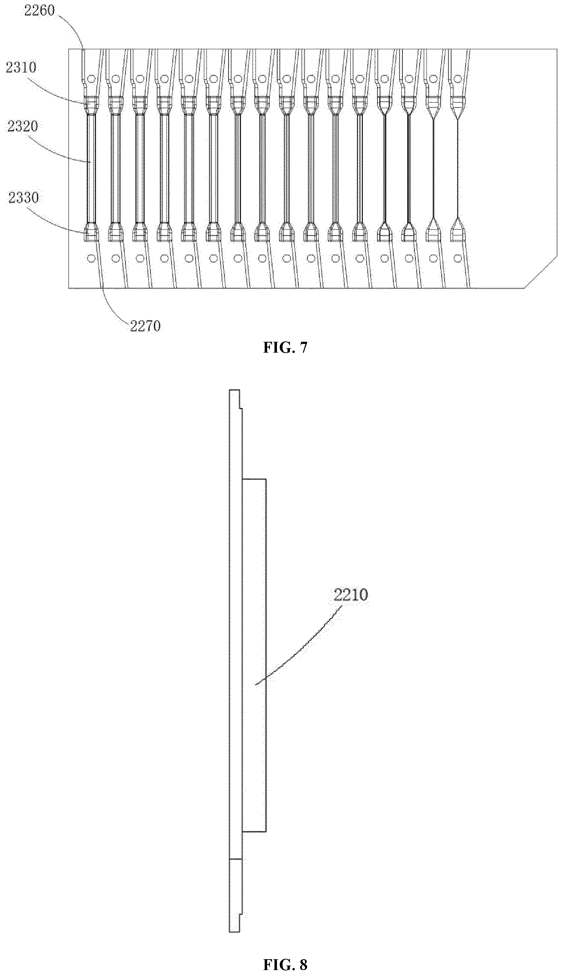

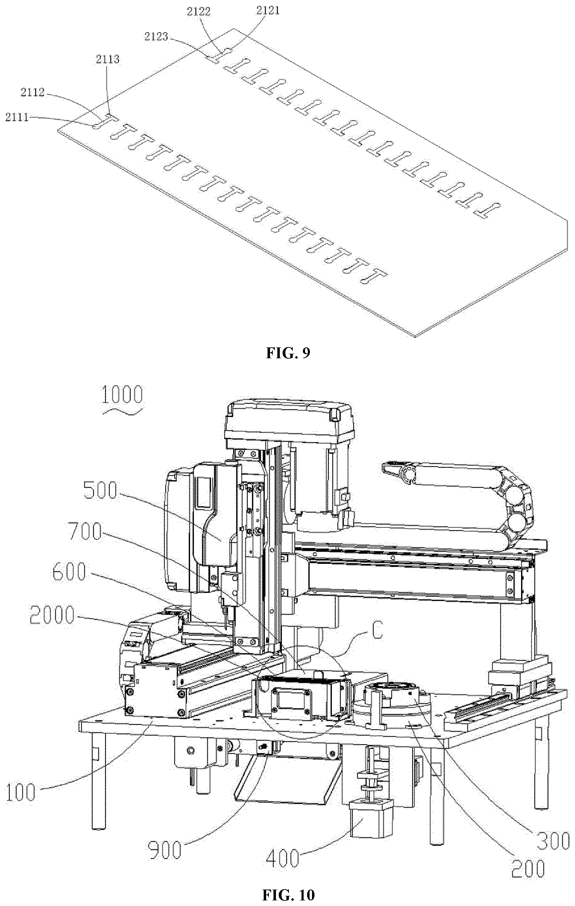

In some embodiments, the overflow cavity 2250 is disposed within the substrate 2200, and the electrophoresis channel 2300 is formed between the cover plate 2100 and the substrate 2200. Referring to FIGs. 2 and 9, the cover plate 2100 may be a flat plate. Referring to FIGs. 2 and 8, the substrate 2200 may be provided with protrusions 2210 to bond the cover plate 2100 and the substrate 2200 together, and inner spaces defined by the protrusions 2210 disposed on the substrate 2200 form the electrophoresis channels 2300.

In some embodiments, the electrophoresis channel 2300 is disposed on the cover plate 2100, and the overflow cavity 2250 is formed between the cover plate 2100 and the substrate 2200. The cover plate 2100 may be provided with a first boss, the space inside the first boss serves as the electrophoresis channel, and the substrate 2200 may be provided with a second boss. When the substrate 2200 is disposed on the cover plate 2100, the second boss covers the first boss, and the accommodating space of the second boss is slightly larger than the accommodating space of the first boss, thereby forming the overflow cavity 2250 between the cover plate 2100 and the substrate 2200.

The cover plate 2100 may be made of an inorganic insulating material, an organic insulating material, a polymer insulating material, a composite material, or a combination material. Preferably, the cover plate 2100 may be made of a polypropylene material. The polypropylene material exhibits excellent optical transparency and does not release ions from its surface in an aqueous environment. As a result, the electroosmosis effect can be prevented even without surface treatment, thereby avoiding interference with the electrophoretic separation of the sample.

The substrate 2200 may be made of an inorganic insulating material, an organic insulating material, a polymer insulating material, a composite material, or a combination material. Preferably, the substrate 2200 may be made of a polypropylene material. The polypropylene material exhibits excellent optical transparency and does not release ions from its surface in an aqueous environment. As a result, the electroosmosis effect can be prevented even without surface treatment, thereby avoiding interference with the electrophoretic separation of the sample.

The substrate 2200 is disposed on the cover plate 2100 by means of adhesion or bonding. Adhesion refers to attaching the substrate 2200 to the cover plate 2100 by using an adhesive substance such as glue, while bonding refers to bonding the substrate 2200 to the cover plate 2100 through methods such as hot-melt bonding and ultrasonic bonding.

The overflow cavity 2250 is disposed inside the substrate 2200, or the overflow cavity 2250 is formed between the cover plate 2100 and the substrate 2200. The overflow cavity 2250 is configured as a sealed cavity. The chip 2000 is applied to a sample analysis device 1000. The sample analysis device 1000 includes the sample transfer mechanism 500. The sample transfer mechanism 500 is configured to load the sample into the electrophoresis channel 2300 of the chip 2000. Subsequently, the sample analysis device 1000 analyzes the sample in the electrophoresis channel 2300. During the sample loading process of the sample transfer mechanism 500, the sample transfer mechanism 500 first enters the substrate 2200, then passes through the overflow cavity 2250, and finally enters the electrophoresis channel 2300. Since the electrophoresis channel 2300 is filled with buffer solution and gel, when the sample transfer mechanism 500 enters into the electrophoresis channel 2300, the space in the electrophoresis channel 2300 is occupied, thereby compressing the liquid in the electrophoresis channel 2300 and causing it to overflow. When the sample transfer mechanism 500 sequentially passes through the overflow cavity 2250 and the electrophoresis channel 2300, the overflow cavity 2250 is in communication with the electrophoresis channel 2300, such that the overflowed liquid is allowed to enter the overflow cavity 2250, and the liquid is prevented from overflowing out of the chip 2000.

During the sample loading process, the sample transfer mechanism 500 generally needs to perform two actions, i.e., piercing and sample loading. The piercing action refers to piercing into the chip 2000 to form a movable channel in communication with the electrophoresis channel 2300. The sample loading involves entering the electrophoresis channel 2300 along the movable channel and then delivering the sample into the electrophoresis channel 2300. Two possible situations may occur here: ① The sample transfer mechanism 500 includes a puncture needle configured to pierce and establish communication with the electrophoresis channel 2300. Specifically, the puncture needle first pierces into the substrate 2200, then pierces into the overflow cavity 2250, and finally pierces into the electrophoresis channel 2300, where the puncture needle compresses the electrophoresis channel 2300, causing the liquid to overflow into the overflow cavity 2250. ② The sample transfer mechanism 500 includes a sample loading needle. After the puncture needle completes piercing, the sample loading needle moves along the puncture path to load the sample into the electrophoresis channel 2300. Specifically, the sample loading needle first enters the substrate 2200, then enters the overflow cavity 2250, and finally enters the electrophoresis channel 2300. In this case, since the sample loading needle is smaller than the puncture needle, the sample loading needle may not necessarily compress the liquid in the electrophoresis channel 2300 to overflow. However, when the sample loading needle delivers the sample into the electrophoresis channel 2300, the sample compresses the electrophoresis channel 2300, causing the liquid in the electrophoresis channel 2300 to overflow into the overflow cavity 2250.

The buffer solution described above may be a TAE buffer solution, or other buffer solutions, such as an MOPS buffer solution, a TBE buffer solution, and a TTE buffer solution. The gel described above may be an agarose gel, or other gels such as a polyacrylamide gel.

In this embodiment, the sample transfer mechanism 500 loads the sample into the electrophoresis channel 2300. The overflow cavity 2250 can store the liquid overflowing from the electrophoresis channel 2300, thereby preventing the liquid from overflowing the electrophoresis chip 2000, such that effective electrophoresis and imaging on the sample by an electrophoresis mechanism 600 and an imaging mechanism 700 in the subsequent process are ensured, while also maintaining stable transfer of the chip 2000 during the subsequent chip 2000 transfer process, thus preventing biological contamination caused by chip 2000 dropping due to slippage.

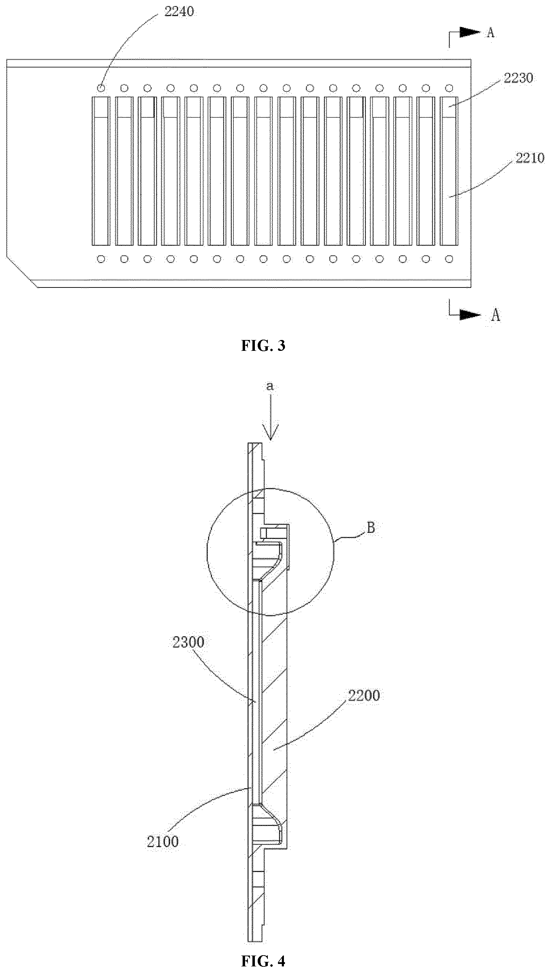

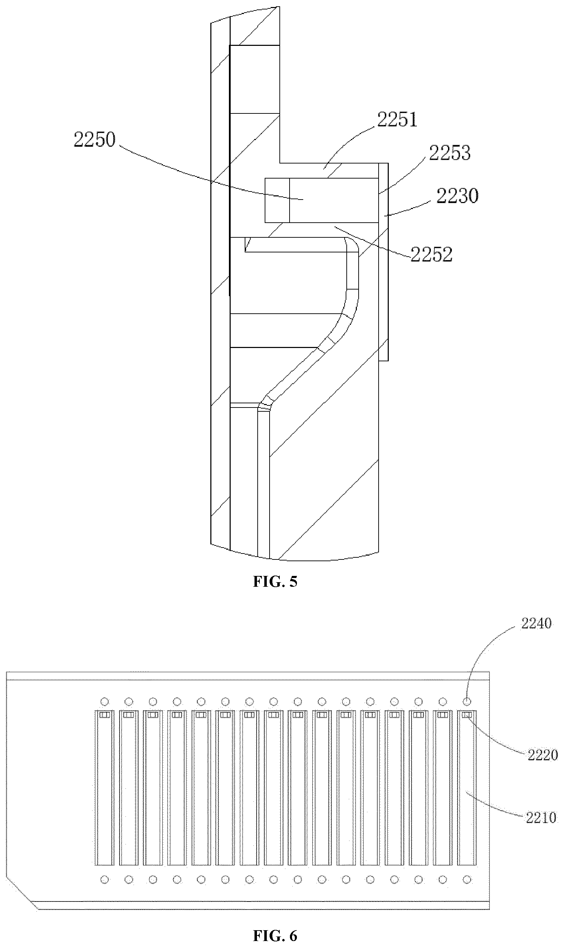

In some specific embodiments of the present disclosure, referring to FIGs. 4 and 5, the overflow cavity 2250 includes a first surface 2251 and a second surface 2252 opposite to the first surface 2251. The sample transfer mechanism 500 enters the substrate 2200, and then sequentially penetrates through the first surface 2251 and the second surface 2252, and enters the electrophoresis channel 2300. The liquid overflowing from the electrophoresis channel 2300 enters between the first surface 2251 and the second surface 2252. During the piercing process, after the puncture needle of the sample transfer mechanism 500 enters the substrate 2200, the puncture needle needs to sequentially penetrate through the first surface 2251 and the second surface 2252 and then enter the electrophoresis channel 2300. An accommodating cavity is formed between the first surface 2251 and the second surface 2252, thereby allowing the liquid overflowing from the electrophoresis channel 2300 to enter the accommodating cavity. During the sample loading process, after the sample loading needle of the sample transfer mechanism 500 enters the substrate 2200, the sample loading needle needs to sequentially penetrate through the first surface 2251 and the second surface 2252 and then enter the electrophoresis channel 2300. An accommodating cavity is formed between the first surface 2251 and the second surface 2252, thereby allowing the liquid overflowing from the electrophoresis channel 2300 to enter the accommodating cavity.

For example, referring to FIG. 4, the chip 2000 is vertically placed, and the puncture needle and the sample loading needle of the sample transfer mechanism 500 perform piercing and sample loading actions along the direction a (i.e., from top to bottom), respectively, so as to complete the piercing and sample loading.

In some specific embodiments of the present disclosure, referring to FIGs. 4 and 5, the first surface 2251 and the second surface 2252 each have a thickness of greater than 0.2 mm.

Due to extreme fabrication constraints during the preparation process of the substrate 2200, the thicknesses of both the first surface 2251 and the second surface 2252 are set to be greater than 0.2 mm. For example, the thicknesses of both the first surface 2251 and the second surface 2252 are set to be 0.22 mm, 0.24 mm, 0.26 mm, 0.28 mm, or 0.3 mm.

In some specific embodiments of the present disclosure, referring to FIGs. 4 and 5, the distance between the first surface 2251 and the second surface 2252 is greater than 0.2 mm.

Due to extreme fabrication constraints during the preparation process of the substrate 2200, the distance between the first surface 2251 and the second surface 2252 is set to be greater than 0.2 mm. For example, the distance between the first surface 2251 and the second surface 2252 is set to be 0.22 mm, 0.24 mm, 0.26 mm, 0.28 mm, or 0.3 mm.

In some specific embodiments of the present disclosure, referring to FIGs. 4 and 5, the volume of the overflow cavity 2250 is greater than the sum of the volume occupied by the puncture needle of the sample transfer mechanism 500 entering the electrophoresis channel 2300 and a first margin.

In the process of piercing, the liquid may overflow into the overflow cavity 2250, and in the process of sample loading, the liquid may also overflow into the overflow cavity 2250. Therefore, both scenarios need to be comprehensively considered, and the volume of the overflow cavity 2250 needs to be greater than the total volume of the liquid that overflows during both the piercing and sample loading processes. Since the chip 2000 is applied in a variety of scenarios, different sample volumes are required, which means that the sample volume delivered into the electrophoresis channel 2300 is not fixed. However, the size of the puncture needle is fixed. Combined with the travel distance of the puncture needle, the volume occupied by the puncture needle entering the electrophoresis channel 2300 is fixed. After comprehensive consideration, the first margin is set to be greater than or equal to 50% of the volume occupied by the puncture needle entering the electrophoresis channel 2300. For example, such a percentage may be 50%, 60%, 70%, 80%, 90%, or 100%. The first margin can accommodate various sample volumes. Consequently, the volume of the overflow cavity 2250 is set to be greater than the sum of the volume occupied by the puncture needle of the sample transfer mechanism 500 entering the electrophoresis channel 2300 and 50% of the volume occupied by the puncture needle of the sample transfer mechanism 500 entering electrophoresis channel 2300, that is, the volume of the overflow cavity 2250 is set to be greater than 150% of the volume occupied by the puncture needle of the sample transfer mechanism 500 entering the electrophoresis channel 2300. Therefore, the overflow cavity 2250 has sufficient volume to accommodate the liquid that overflows under different sample volume conditions.

In some specific embodiments of the present disclosure, referring to FIGs. 4 and 5, the shortest sides of the first surface 2251 and the second surface 2252 are both greater than the sum of the aperture of the puncture needle of the sample transfer mechanism 500, twice the positioning deviation of the sample transfer mechanism 500, and a second margin.

Firstly, the aperture of the puncture needle or the sample loading needle needs to be considered. Typically, the aperture of the puncture needle is larger than the aperture of the sample loading needle. Therefore, if the shortest sides of the first surface 2251 and the second surface 2252 satisfy the aperture requirement of the puncture needle, they also satisfy the aperture requirement of the sample loading needle. Secondly, since the positioning of the sample transfer mechanism 500 during movement is not entirely precise, the positioning deviation needs to be taken into account. Finally, some additional margin is required, such as a margin of greater than or equal to 0.1 mm. After comprehensive consideration, the shortest sides of the first surface 2251 and the second surface 2252 are both greater than the sum of the aperture of the puncture needle of the sample transfer mechanism 500, twice the positioning deviation of the sample transfer mechanism 500, and the second margin. This can ensure that the sample transfer mechanism 500 can sequentially penetrate through the first surface 2251 and the second surface 2252 during the piercing and sample loading processes, without deviating from the first surface 2251 and the second surface 2252.

In some specific embodiments of the present disclosure, referring to FIGs. 1 to 6, the overflow cavity 2250 further includes a third surface 2253. The third surface 2253 is connected to both the first surface 2251 and the second surface 2252, the third surface 2253 is provided with a first opening 2220, and a film 2230 is disposed on the first opening 2220 to seal the first opening 2220.

During the preparation process of the overflow cavity 2250, an initial version of the substrate 2200 is typically prepared first, followed by the preparation of the overflow cavity 2250 in the substrate 2200. Therefore, the first opening 2220 needs to be first provided in the third surface 2253 of the overflow cavity 2250 (or the first opening 2220 may be formed during the preparation of the initial version of the substrate 2200). Then, a mold is placed into the first opening 2220 to prepare and form the overflow cavity 2250, after which the mold is removed. Subsequently, the first opening 2220 needs to be sealed, such that the overflow cavity 2250 becomes a sealed cavity, and the overflowed liquid does not flow out of the overflow cavity 2250. Thus, a low-cost and easy-to-process method is considered, where the film 2230 is disposed on the first opening 2220, thereby sealing the first opening 2220 through the film 2230.

The film 2230 is disposed on the first opening 2220 by means of adhesion or bonding. Adhesion refers to attaching the film 2230 to the first opening 2220 by using an adhesive substance such as glue, while bonding refers to bonding the film 2230 to the first opening 2220 through methods such as hot-melt bonding and ultrasonic bonding.

In some specific embodiments of the present disclosure, the first surface 2251 is provided with a second opening, and the film 2230 extends from the first opening 2220 to the second opening to seal the first opening 2220 and the second opening.

The first surface 2251 of the overflow cavity 2250 is provided with a second opening. The film 2230 blocks the first opening 2220, and then the film 2230 is extended to the second opening, such that the second opening is sealed with the film 2230. For specific implementation, the film 2230 is first used to seal the first opening 2220, then the film 2230 is bent at the junction of the first opening 2220 and the second opening, and finally, the film 2230 is used to seal the second opening.

Considering that the first surface 2251 is merely part of the overflow cavity 2250 and only needs to accommodate the overflowed liquid, the first surface does not need to have certain support capability. Therefore, sealing the first surface 2251 with the film 2230 can reduce the cost and simplify the processing. In addition, the piercing difficulty for the puncture needle of the sample transfer mechanism 500 during subsequent piercing can be reduced, thereby facilitating smooth piercing of the puncture needle. In addition, considering that the second surface 2252 of the overflow cavity 2250 contacts the electrophoresis channel 2300, the second surface 2252 needs to have certain support capability. Therefore, it is not suitable to seal the second surface 2252 with the film 2230.

In some specific embodiments of the present disclosure, a plurality of electrophoresis channels 2300 are provided, and each electrophoresis channel 2300 is provided with a corresponding overflow cavity 2250; the film 2230 is a single film, and the single film 2230 is configured to seal all of the first openings 2220 and the second openings.

A plurality of electrophoresis channels 2300 are provided, and each electrophoresis channel 2300 can load one sample. After all electrophoresis channels 2300 load the samples, a plurality of samples can be analyzed simultaneously, thereby greatly improving the analysis efficiency. Each electrophoresis channel 2300 is provided with a corresponding overflow cavity 2250, and each overflow cavity 2250 can accommodate the liquid overflowing from the corresponding electrophoresis channel 2300, thereby preventing the liquid from overflowing the chip 2000. Each overflow cavity 2250 includes a first opening 2220 and a second opening. If the first opening 2220 and the second opening are sealed separately with the film 2230, a plurality of films 2230 need to be cut and bonded to the first opening 2220 and the second opening, respectively. Therefore, a single film 2230 is considered as the solution. The film 2230 is first bonded to all of the first openings 2220, the film 2230 is bent at the junction of the first opening 2220 and the second opening, and then the film 2230 is bonded to all of the second openings, thereby effectively reducing the processing difficulty and providing a more reliable sealing effect than sealing each first opening 2220 and each second opening with a separate film 2230.

In some specific embodiments of the present disclosure, referring to FIGs. 2 and 9, a first conductive structure 2110 and a second conductive structure 2120 are disposed on the cover plate 2100. The first conductive structure 2110 and the second conductive structure 2120 are respectively positioned at two ends of the electrophoresis channel 2300.

One end of the electrophoresis channel 2300 serves as the sample introduction end. The conductive structure at the sample introduction end is a negative electrode conductive structure, while the conductive structure distal to the sample introduction end is a positive electrode conductive structure. Referring to FIGs. 2 and 9, the first conductive structure 2110 is a negative conductive structure, and the second conductive structure 2120 is a positive conductive structure. The sample analysis device 1000 includes an electrophoresis mechanism 600 and an imaging mechanism 700. Probes 620 of the electrophoresis mechanism 600 respectively contact the first conductive structure 2110 and the second conductive structure 2120 to generate a voltage applied to the sample in the electrophoresis channel 2300, thereby achieving electrophoretic separation of the sample. After the electrophoretic separation of the sample is completed, the imaging mechanism 700 captures images of the sample, and the captured images are analyzed to obtain information such as fragment length, concentration, and integrity of the sample.

The first conductive structure 2110 and the second conductive structure 2120 may be electrode plates, which are disposed on the cover plate 2100 in a sheet-like form.

The first conductive structure 2110 and the second conductive structure 2120 may be made of graphite material. The first conductive structure 2110 and the second conductive structure 2120 may also be made of other materials, such as metal materials including copper, aluminum, platinum, and the like.

In some specific embodiments of the present disclosure, referring to FIGs. 2 and 9, the first conductive structure 2110 includes a first contact point end 2111, a first contact end 2113, and a first connection end 2112 connecting the first contact point end 2111 and the first contact end 2113, and the first contact end 2113 contacts the corresponding electrophoresis channel 2300; the second conductive structure 2120 includes a second contact point end 2121, a second contact end 2123, and a second connection end 2122 connecting the second contact point end 2121 and the second contact end 2123, and the second connection end 2122 contacts the corresponding electrophoresis channel 2300; the cover plate 2100 or the substrate 2200 is provided with puncture holes 2240 corresponding to the first contact point end 2111 and the second contact point end 2121.

The probes 620 of the electrophoresis mechanism 600 respectively contact the first contact point end 2111 and the second contact point end 2121. The first contact point end 2111 transmits electricity to the first contact end 2113 through the first connection end 2112, and the second contact point end 2121 transmits electricity to the second contact end 2123 through the second connection end 2122. This allows the first conductive structure 2110 and the second conductive structure 2120 to apply voltage to the sample in the electrophoresis channel 2300.

The cover plate 2100 or the substrate 2200 is provided with puncture holes 2240 corresponding to the first contact point end 2111 and the second contact point end 2121. By providing the puncture holes 2240, the probes 620 can pass through the puncture holes 2240 and then contact the first conductive structure 2110 and the second conductive structure 2120, thereby successfully applying voltage to the sample. In addition, the puncture holes 2240 have a certain positioning functions to prevent the probes 620 from moving to incorrect positions.

In some specific embodiments of the present disclosure, referring to FIG. 7, the electrophoresis channel 2300 includes an intermediate channel 2320, and a first channel 2310 and a second channel 2330 disposed at both ends of the intermediate channel 2320. The first channel 2310 is disposed adjacent to the overflow cavity 2250.

The first conductive structure 2110 and the second conductive structure 2120 are disposed on the cover plate 2100 and correspond to the electrophoresis channel 2300. Specifically, the first conductive structure 2110 and the second conductive structure 2120 are integrally disposed on the cover plate 2100, the first contact end 2113 contacts the first channel 2310, and the second contact end 2123 contacts the second channel 2330.

The electrophoresis channel 2300 is filled with buffer solution and gel. After loading the sample into the first channel 2310, the probes 620 of the electrophoresis mechanism 600 contact the first conductive structure 2110 and the second conductive structure 2120 to generate a voltage applied to the sample in the first channel 2310. Under the action of an electric field force, the sample moves from the first channel 2310 toward the second channel 2330. The gel has a porous structure, and may serve as a sieving medium, while the buffer solution functions to maintain the dissociation degree. This enables differential separation of sample fragments of varying lengths, and the sample fragments of varying lengths form bands in the electrophoresis channel 2300, thereby completing the electrophoretic separation process.

In some specific embodiments of the present disclosure, referring to FIG. 7, in a direction perpendicular to a line connecting centers of the first channel 2310, the intermediate channel 2320, and the second channel 2330, the cross-sectional width of the first channel 2310 and the cross-sectional width of the second channel 2330 are both greater than the cross-sectional width of the intermediate channel 2320; in a direction perpendicular to a line connecting centers of the first channel 2310, the intermediate channel 2320, and the second channel 2330, the cross-sectional width of the first channel 2310 facing the intermediate channel 2320 is initially equal and then gradually decreases, and the cross-sectional width of the second channel 2330 facing the intermediate channel 2320 is initially equal and then gradually decreases. The objectives of the above design are as follows: ① After the sample is loaded into the first channel 2310, a reduced amount of sample is converged into the narrower intermediate channel 2320 in a convergent manner. This increases the concentration per unit cross-sectional area, thereby improving the detection sensitivity while simultaneously reducing the sample loading amount. ② Due to the dimensions of the puncture needle and the sample loading needle of the sample transfer mechanism 500, piercing and sample loading cannot be performed in the narrow channel. Therefore, a wider first channel 2310 needs to be provided to perform piercing and sample loading in the first channel 2310. ③ During the process of filling the chip with gel and buffer solution, the gel may be introduced into the second channel 2330, and the buffer solution may be introduced into the first channel 2310. The relatively wider channels of the first channel 2310 and the second channel 2330 facilitate smooth filling of the buffer solution in the first channel 2310 and filling of the gel in the second channel 2330.

In some specific embodiments of the present disclosure, referring to FIG. 7, in the direction perpendicular to the line connecting the centers of the first channel 2310, the intermediate channel 2320, and the second channel 2330, the cross-sectional width of the intermediate channel 2320 has a plurality of different specifications, thereby meeting analytical requirements for different sample volumes.

In some specific embodiments of the present disclosure, referring to FIGs. 2, 7, and 9, in the direction perpendicular to the line connecting the centers of the first channel 2310, the intermediate channel 2320, and the second channel 2330, the cross-sectional widths of the first contact end 2113 and the second contact end 2123 are greater than or equal to the cross-sectional widths of the first channel 2310 and the second channel 2330, such that a sufficiently strong electric field force can be applied to the sample in the first channel 2310, thereby ensuring successful movement of the sample in the first channel 2310 toward the second channel 2330.

In some specific embodiments of the present disclosure, referring to FIG. 7, a buffer solution delivery channel 2260 in communication with the first channel 2310 and a gel delivery channel 2270 in communication with the second channel 2330 are provided on the substrate 2200.

During the preparation of the chip 2000, the buffer solution delivery channels 2260 in communication with the first channels 2310 are interconnected. By communicating a buffer solution delivery mechanism (generally including a pump and a buffer solution storage box) with one end of the buffer solution delivery channel 2260, the buffer solution can be sequentially delivered from the buffer solution delivery channels 2260 to the first channels 2310. Then, the buffer solution delivery channels 2260 are heat-sealed and cut, resulting in the structure of the substrate 2200 of the chip 2000 as shown in FIG. 7. The gel delivery channels 2270 in communication with the second channels 2330 are independent of each other and are separately connected to a gel delivery mechanism (generally including a switching valve, a pump, and a gel storage box). The gel delivery mechanism delivers the gel into each second channel 2330 separately. Then, the gel delivery channels 2270 are heat-sealed and cut, resulting in the structure of the substrate 2200 of the chip 2000 as shown in FIG. 7.

The embodiments of the present disclosure provide a sample analysis device 1000 with oscillation and centrifugation functions for implementing the detection method according to any one aspect described above. Referring to FIGs. 10, 12, and 14, the sample analysis device 1000 includes:
a bottom plate 100;
an oscillation module 200 disposed on the bottom plate 100;
a centrifuge module 300 disposed on the oscillation module 200, where the centrifuge module 300 is provided with a plurality of sample receptacles 321;
a driving mechanism 400 in a driving connection with the centrifuge module 300, where the driving mechanism 400 drives the centrifuge module 300 to disengage from the oscillation module 200;
a sample transfer mechanism 500 disposed on the bottom plate 100, where the sample transfer mechanism 500 transfers the oscillated and centrifuged sample in the sample receptacle 321 to the chip 2000; and
an electrophoresis mechanism 600 and an imaging mechanism 700 disposed on the bottom plate 100, where the electrophoresis mechanism 600 performs electrophoretic separation on the sample in the chip 2000, and the imaging mechanism 700 captures images of the sample which has undergone electrophoretic separation. The bottom plate 100 is designed in a square structure. The oscillation module 200, the sample transfer mechanism 500, the electrophoresis mechanism 600, and the imaging mechanism 700 are all disposed on the bottom plate 100. The lower surface of the bottom plate 100 is provided with a plurality of support legs, and the support legs provide support for the bottom plate 100. The support legs are disposed at four corners of the bottom plate 100, thereby offering better support for the bottom plate 100.

The centrifuge module 300 is provided with a plurality of sample receptacles 321, allowing the user to place samples in each sample receptacle 321. The user may first place the samples in reagent tubes, and then insert the reagent tubes into the sample receptacles 321. After the sample analysis is completed, the user may remove the reagent tubes and proceed with the next sample loading operation. Alternatively, the user may directly place the samples in the sample receptacles 321. After the sample analysis is completed, the user cleans the sample receptacles 321 before continuing with the next sample loading operation. The central axis of the sample receptacle 321 is inclined at a certain angle relative to the vertical line perpendicular to the ground, such as 5°, 10° or 15°, thereby ensuring better oscillation and centrifugation effects on the samples in the sample receptacles 321 in the subsequent process. The number of the sample receptacles 321 is equal to the number of the electrophoresis channels of a single chip 2000. For example, if the single chip 2000 has 16 electrophoresis channels, the number of the sample receptacles 321 is also 16. The user may place a batch of samples in all the sample receptacles 321. The samples in all the sample receptacles 321, after completion of oscillation and centrifugation, may be separately transferred to the electrophoresis channels of one chip 2000, and then the samples in this chip 2000 are subjected to electrophoresis, imaging, and analysis. Upon completion of analysis on the current batch of samples, the next batch of samples can be placed and analyzed, thereby improving the efficiency of sample analysis. The oscillation module 200 is a vortex-type oscillation module, which operates based on the oscillation principle of a conventional vortex oscillator and utilizes eccentric rotation to cause the centrifuge module 300 to perform oscillatory motion within a certain range. As a result, the samples in the sample receptacles 321 of the centrifuge module 300 also undergo oscillatory motion within a certain range, such that a shaking and oscillation effect is achieved for the samples, thereby thoroughly mixing the samples.

After completion of oscillation of the samples, the driving mechanism 400 drives the centrifuge module 300 to disengage from the oscillation module 200. Since the oscillation module 200 is fixedly disposed on the bottom plate 100, the oscillation module 200 remains stationary when the driving mechanism 400 drives the centrifuge module 300 to disengage. If the centrifuge module 300 is disposed above the oscillation module 200, the driving mechanism 400 drives the centrifuge module 300 to move upward, so as to disengage the centrifuge module 300 from the oscillation module 200; alternatively, the driving mechanism 400 transfers the centrifuge module 300 by gripping, thereby allowing the centrifuge module 300 to disengage from the oscillation module 200.

After the centrifuge module 300 disengages from the oscillation module 200, the centrifuge module 300 rotates at a high speed to drive the samples in the sample receptacles 321 for centrifugal motion, thereby separating substances of different densities in the sample and achieving purification.

After completion of centrifugation of the samples, the centrifuge module 300 is reset, the oscillation module 200 provides support for the centrifuge module 300, and the sample transfer mechanism 500 transfers the oscillated and centrifuged sample in the sample receptacle 321 to the chip 2000. In this way, contact between the sample transfer mechanism 500 and the centrifuge module 300 during the sample collection process can be avoided, thereby preventing the centrifuge module 300 from shaking and causing sample collection failures. Alternatively, the centrifuge module 300 still remains disengaged from the oscillation module 200, while the sample transfer mechanism 500 transfers the oscillated and centrifuged sample in the sample receptacle 321 to the chip 2000. The centrifuge module 300 is then reset, and the oscillation module 200 provides support for the centrifuge module 300. In this way, the travel distance of the sample transfer mechanism 500 can be reduced, thereby improving the efficiency of sample transfer.

After completion of sample transfer into the chip 2000, the electrophoresis mechanism 600 performs electrophoretic separation on the sample in the chip 2000. After the electrophoretic separation of the sample is completed, the imaging mechanism 700 captures images of the sample. Finally, the captured images are analyzed to obtain information such as fragment length, concentration, and integrity of the sample.

The sample analysis device 1000 provided by the present disclosure can perform electrophoretic analysis for samples containing biological substances such as DNA, RNA, or protein by means of electrophoresis technology.

For example, for nucleic acid samples containing DNA or RNA, the nucleic acid samples are first separately placed in the sample receptacles 321 of the centrifuge module 300. The oscillation module 200 drives the centrifuge module 300 to perform oscillatory motion, that is, the nucleic acid samples in the sample receptacles 321 of the centrifuge module 300 are driven to undergo oscillatory motion. Then, the driving mechanism 400 drives the centrifuge module 300 to disengage from the oscillation module 200, and then the centrifuge module 300 drives the nucleic acid samples in the sample receptacles 321 for centrifugal motion. After completion of oscillation and centrifugation of the nucleic acid samples, the sample transfer mechanism 500 separately transfers the nucleic acid samples in the sample receptacles 321 to the chip 2000. The liquid overflowing from the electrophoresis channel enters the overflow cavity, so as to prevent the liquid from overflowing outside the chip 2000. The electrophoresis mechanism 600 applies voltage to the nucleic acid samples in the chip 2000, causing the nucleic acid samples to move under the action of an electric field force. Due to the presence of nucleic acid fragments of varying lengths in the nucleic acid samples, the differential separation of the nucleic acid fragments of varying lengths is achieved, resulting in a plurality of bands. After completion of electrophoretic separation of the nucleic acid samples, the imaging mechanism 700 captures images of the nucleic acid samples. The captured images are then analyzed to obtain information such as fragment length, concentration, and integrity corresponding to each band of the nucleic acid samples. For samples containing other biological substances, the same process applies, that is, the samples undergo oscillatory motion via the oscillation module 200 and centrifugal motion via the centrifuge module 300, and are then transferred to the chip 2000 for electrophoretic separation by the electrophoresis mechanism 600, followed by image capture by the imaging mechanism 700; finally, the captured images are analyzed to complete the analysis process.

Further, a molecular weight standard (Ladder) is loaded into the nucleic acid sample. Both the nucleic acid sample and the molecular weight standard undergo electrophoretic separation under the action of an electric field force. During subsequent analysis based on the captured images, the bands separated from the molecular weight standard serve as a reference. By comparing the bands separated from the molecular weight standard with those separated from the nucleic acid sample, the length, concentration, and nucleic acid integrity number of the nucleic acid fragments corresponding to the bands separated from the nucleic acid sample can be calculated. Certainly, it is possible to directly calculate the length, concentration, and nucleic acid integrity number of the nucleic acid fragment corresponding to the bands separated from the nucleic acid sample based on the bands of the nucleic acid sample after electrophoretic separation, without loading the molecular weight standard into the nucleic acid sample.

In the sample analysis device 1000 provided by the present disclosure, after the sample is placed in the sample receptacle 321, the oscillation module 200 drives the centrifuge module 300 to perform oscillatory motion, causing the sample in the sample receptacle 321 to undergo oscillatory motion. Then, the driving mechanism 400 drives the centrifuge module 300 to disengage from the oscillation module 200, and the centrifuge module 300 drives the sample for centrifugal motion. Subsequently, the sample transfer mechanism 500 transfers the oscillated and centrifuged sample in the sample receptacle 321 to the chip 2000. The electrophoresis mechanism 600 performs electrophoretic separation on the sample in the chip 2000, and the imaging mechanism 700 captures images of the sample which has undergone electrophoretic separation, thereby completing an automated oscillation-centrifugation-analysis process for the sample. This process is very simple, time-efficient, and highly effective. Only the manual loading of samples into the sample receptacles 321 is required, while the rest of the operations are fully automated, thereby ensuring sample reliability. In addition, the sample analysis device 1000 integrates both the oscillation module 200 and the centrifuge module 300, offering a high level of integration. This eliminates the need for the user to separately purchase oscillation and centrifugation devices, thereby providing significant convenience to the user.

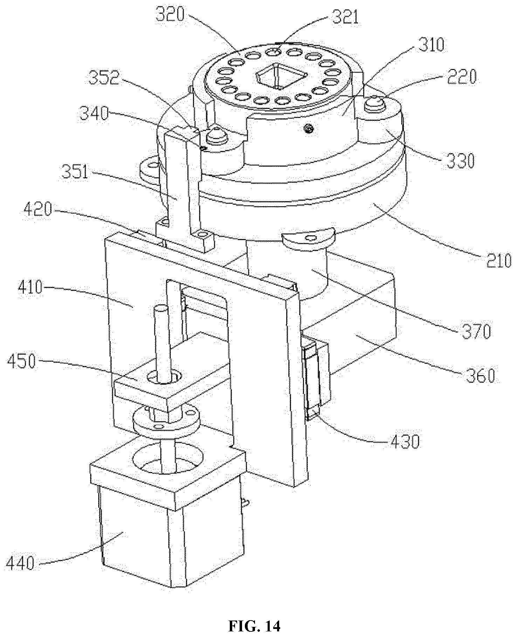

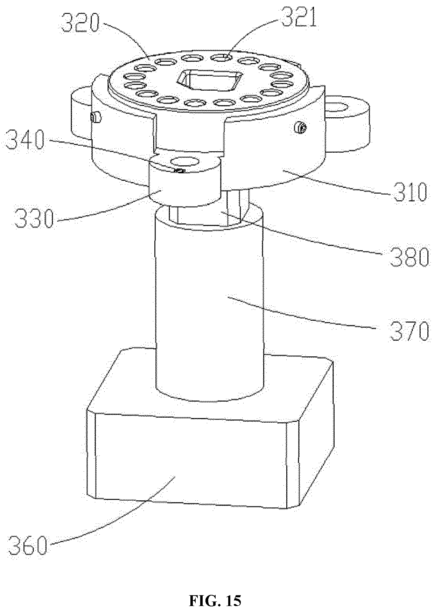

In some specific embodiments of the present disclosure, referring to FIGs. 14 and 15, the second limiting member is a plurality of bosses 330 circumferentially arranged around the first mounting base 310, and one of the bosses 330 is provided with a first attracting member 340; the centrifuge module 300 further includes a second attracting member 352 disposed on the bottom plate 100 and configured to attract and be attracted by the first attracting member 340, and the second attracting member 352 is positioned adjacent to the first mounting base 310.

A fixing base 351 is disposed on the bottom plate 100, and the second attracting member 352 is fixedly disposed on the fixing base 351 and faces the first mounting base 310.

For example, the first attracting member 340 is a first magnetic member, the second attracting member 352 is a second magnetic member, and the first magnetic member and the second magnetic member exhibit opposite magnetic polarities. Further, the first magnetic member and the second magnetic member may be magnets with opposite magnetic polarities. The permanent magnetism of magnets ensures that when the oscillation module 200 and the centrifuge module 300 cease motion, the first magnetic member and the second magnetic member stop at positions corresponding to each other, thereby facilitating the identification of individual samples and their corresponding positions.

Alternatively, the first attracting member 340 is a magnet, and the second attracting member 352 is an iron rod. When the oscillation module 200 and the centrifuge module 300 cease motion, the magnet and the iron rod stop at positions corresponding to each other, thereby facilitating the identification of individual samples and their corresponding positions.

In this embodiment, the boss 330 is provided with a limiting hole, and a limiting shaft is disposed above the oscillator 210. The limiting shaft serves as the first limiting member 220. By inserting the limiting shaft into the limiting hole, mutual positioning constraint between the oscillator 210 and the first mounting base 310, that is, mutual positioning constraint between the oscillator 210 and the centrifuge 320, is achieved. Alternatively, the boss 330 is provided with a limiting shaft extending downward, and a limiting hole extending inward is provided above the oscillator 210. The limiting hole serves as the first limiting member 220. By inserting the limiting shaft into the limiting hole, mutual positioning constraint between the first mounting base 310 and the oscillator 210, that is, mutual positioning constraint between the centrifuge 320 and the oscillator 210, is achieved.

The height of the second attracting member 352 is slightly higher than that of the oscillator 210, such that when the driving mechanism 400 drives the centrifuge 320 to disengage from the oscillator 210, the first attracting member 340 and the second attracting member 352 are aligned at the same height.

When samples are loaded into the sample receptacles 321 of the centrifuge 320, the position of the first loaded sample is first identified (for example, the first loaded sample is loaded into the sample receptacle 321 corresponding to the first attracting member 340), and then the positions of the samples in other sample receptacles 321 are sequentially identified based on the sample loading sequence (e.g., clockwise or counterclockwise). Subsequently, the oscillator 210 drives the centrifuge 320 and the samples to perform oscillatory motion. After the oscillation is completed, the positions of the samples remain unchanged. Then, the centrifuge 320 drives the samples for centrifugal motion. As the centrifuge 320 gradually stops rotating, the first attracting member 340 and the second attracting member 352 attract each other, such that the first attracting member 340 can finally stop at the position corresponding to the second attracting member 352, thereby allowing the identification of the specific sample at that position, and in turn, the identification of all samples at their respective positions.

Since conventional centrifuges stop at random positions after performing centrifugal motion, the sample transfer mechanism 500 cannot identify which sample is being extracted. For the analysis device 1000 according to the present disclosure, providing the first attracting member 340 and the second attracting member 352 enables accurate identification of various kinds of samples after centrifugal motion at an extremely low cost, without requiring significant upgrades to identification software, thereby ensuring the accuracy of sample transfer by the sample transfer mechanism 500.

In some specific embodiments of the present disclosure, referring to FIGs. 14 and 15, the centrifuge module 300 further includes a second mounting base 360, a rotary driving member 370 disposed on the second mounting base 360, and a connecting shaft 380 disposed on the rotary driving member 370 and extending through the second mounting base 360. The connecting shaft 380 is connected to the first mounting base 310. The driving mechanism 400 includes:
a support plate 410 disposed below the bottom plate 100, where the support plate 410 is provided with a first through hole;
first guide rails 420 disposed on both sides of the first through hole;
first guide blocks 430 disposed on the first guide rails 420;
a first driving member 440 mounted on the support plate 410; and
a first connecting plate 450, where one end of the first connecting plate 450 is connected to the output shaft of the first driving member 440, and the other end of the first connecting plate passes through the first through hole and is disposed on the first guide block 430 and connected to the second mounting base 360.

After the samples in the sample receptacles 321 of the centrifuge 320 complete oscillation, the first driving member 440 drives the first connecting plate 450 to move upward, and the first connecting plate 450 drives the second mounting base 360 to move upward, that is, the entire centrifuge module 300 is driven to move upward, thereby causing the centrifuge module 300 to disengage from the oscillation module 200. Compared with the mode where the first driving member 440 directly drives the second mounting base 360 to move upward, this movement mode enables a more reliable driving process. The first guide blocks 430 and the first guide rails 420 serve to guide the first connecting plate 450.

The rotary driving member 370 is a rotary motor. After the centrifuge 320 is disengaged from the oscillator 210, the rotary motor drives the first mounting base 310 to rotate at a high speed through the connecting shaft 380, that is, the centrifuge 320 is driven to rotate at a high speed, thereby performing centrifugation on the samples in the sample receptacles 321.

In some specific embodiments of the present disclosure, referring to FIGs. 14 and 15, a limiting groove is disposed below the first mounting base 310, and a second through hole is disposed at the center of the oscillator 210. The connecting shaft 380 passes through the second through hole, and is disposed on the limiting groove.

The limiting groove of the first mounting base 310 cooperates with the connecting shaft 380. Thus, when the first driving member 440 drives the first connecting plate 450 to move upward, the connecting shaft 380 drives the first mounting base 310 to move upward through the second through hole; when the rotary driving member 370 rotates, the connecting shaft 380 drives the first mounting base 310 to rotate.

The arrangement of the second through hole at the center of the oscillator 210 enables vertical integration of the centrifuge module 300 and the oscillation module 200, resulting in a small occupied space. When the centrifuge module 300 needs to be disengaged from the oscillation module 200, the driving mechanism 400 drives the centrifuge module 300 to move upward in the second through hole of the oscillator 210, thereby disengaging the centrifuge module 300 from the oscillation module 200. When the centrifuge module 300 needs to be re-coupled with the oscillation module 200, by allowing the driving mechanism 400 to drive the centrifuge module 300 to move downward in the second through hole of the oscillator 210, the centrifuge module 300 can re-couple with the oscillation module 200.

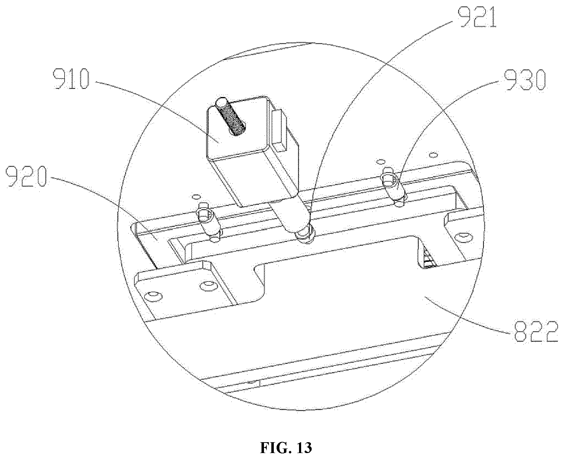

In some specific embodiments of the present disclosure, referring to FIGs. 10 to 13, 19, and 20, the bottom plate 100 is provided with a first cavity 110. The sample analysis device 1000 further includes:
a chip fixing mechanism 800 disposed on the bottom plate 100, where the chip fixing mechanism 800 includes at least one analysis station positioned in the first cavity 110; and
a blocking mechanism 900 disposed in the first cavity 110 and corresponding to the position of the analysis station, where the blocking mechanism 900 includes at least one recovery station.

When the chip 2000 is positioned on the analysis station, the chip fixing mechanism 800 secures the chip 2000, and the blocking mechanism 900 prevents the chip 2000 from falling. Then, the sample transfer mechanism 500 transfers the oscillated and centrifuged sample in the sample receptacle 321 to the electrophoresis channel of the chip 2000. The electrophoresis mechanism 600 performs electrophoretic separation on the sample in the electrophoresis channel, and the imaging mechanism 700 captures images of the sample. Finally, the chip fixing mechanism 800 releases the chip 2000, and the blocking mechanism 900 moves to allow the chip 2000 to fall into the recovery station.

The chip 2000 may be directly placed at the analysis station of the chip fixing mechanism 800, or may be placed at the input port of the sample analysis device 1000, and the chip 2000 at the input port may be transferred to the analysis station of the chip fixing mechanism 800 by a transfer mechanism such as a robotic arm or a conveyor belt. The chip 2000 may be vertically placed. Specifically, the chip 2000 may be directly vertically placed at the analysis station of the chip fixing mechanism 800, or the chip 2000 may be vertically placed at the input port of the sample analysis device 1000, and the chip 2000 at the input port may be transferred to the analysis station of the chip fixing mechanism 800 by the transfer mechanism. Alternatively, the chip 2000 may be horizontally placed. Specifically, the chip 2000 may be directly horizontally placed at the analysis station of the chip fixing mechanism 800, or the chip 2000 may be horizontally placed at the input port of the sample analysis device 1000, and the chip 2000 at the input port may be transferred to the analysis station of the chip fixing mechanism 800 by the transfer mechanism. When the chip 2000 is positioned at the analysis station, the chip fixing mechanism 800 secures the chip 2000, so as to prevent the chip 2000 from moving during subsequent operations including transferring samples to the chip 2000, performing electrophoretic separation on the chip 2000, and capturing images of the chip 2000. In this case, the blocking mechanism 900 is positioned at the initial position, and can block the chip 2000, so as to prevent the chip 2000 from falling.

After the chip 2000 is secured by the chip fixing mechanism 800, the sample transfer mechanism 500 separately transfers the oscillated and centrifuged samples to the chip 2000, and the electrophoresis mechanism 600 performs electrophoretic separation on the samples in the chip 2000. After the electrophoretic separation is completed, the imaging mechanism 700 captures images of the samples, and the captured images are subsequently analyzed.

After the analysis is completed, the chip fixing mechanism 800 releases the chip 2000 and the chip 2000 is not secured, allowing the chip 2000 to move freely. Then, the blocking mechanism 900 starts to move from its initial position. After the chip 2000 is no longer blocked by the blocking mechanism 900, the chip falls into the recovery station.

After the analysis and recovery of one chip 2000 is completed, the next batch of samples is subjected to oscillation and centrifugation, and then transferred to the next chip 2000. The analysis and recovery operations are then performed on the next chip 2000. This process is repeated until the analysis and recovery of all chips 2000 are completed.

In some embodiments, one analysis station and one recovery station are provided. When the chip 2000 is positioned at the analysis station, the chip fixing mechanism 800 secures the chip 2000, and the sample transfer mechanism 500 separately transfers the oscillated and centrifuged samples to the chip 2000. Then, the electrophoresis mechanism 600 performs electrophoretic separation on the chip 2000, and the imaging mechanism 700 captures images of the chip 2000. Finally, the chip fixing mechanism 800 releases the chip 2000, and the blocking mechanism 900 moves to allow the chip 2000 to fall into the recovery station.

In some embodiments, a plurality of analysis stations and a plurality of recovery stations are provided, with each analysis station corresponding to one recovery station. When a plurality of chips 2000 are positioned at the respective analysis stations, the chip fixing mechanism 800 secures the plurality of chips 2000, and the sample transfer mechanism 500 separately transfers the oscillated and centrifuged samples to the chips 2000. Then, the electrophoresis mechanism 600 performs electrophoretic separation on the plurality of chips 2000 either separately or simultaneously, and the imaging mechanism 700 captures images of the plurality of chips 2000 either separately or simultaneously. Finally, the chip fixing mechanism 800 releases the plurality of chips 2000, and the blocking mechanism 900 moves to allow the plurality of chips 2000 to fall into the corresponding recovery stations, respectively.

In some specific embodiments of the present disclosure, referring to FIGs. 10 to 13, and 18, the blocking mechanism 900 includes:
a baffle 920 disposed in the first cavity 110 and corresponding to the position of the analysis station;
a second driving member 910 in a driving connection with the baffle 920; and
a first elastic member 930, where one end of the first elastic member 930 is connected to the bottom plate 100, and the other end of the first elastic member is connected to the baffle 920.

To save space, the second driving member 910 is disposed below the bottom plate 100.

The second driving member 910 can drive the baffle 920 to move. For example, the second driving member 910 is a motor, the baffle 920 is provided with a protrusion 921 extending downward, and the output shaft of the motor is connected to the protrusion 921. When the motor operates, the output shaft drives the protrusion 921 to move, thereby driving the baffle 920 to move.

The baffle 920 is designed in a square loop structure, with a through cavity disposed at the center. Whether the chip 2000 is vertically or horizontally disposed on the analysis station, the side edges of the baffle 920 can prevent the chip 2000 from falling. After the baffle 920 moves, the chip 2000 is no longer blocked by the baffle 920, allowing the chip to fall into the recovery station.

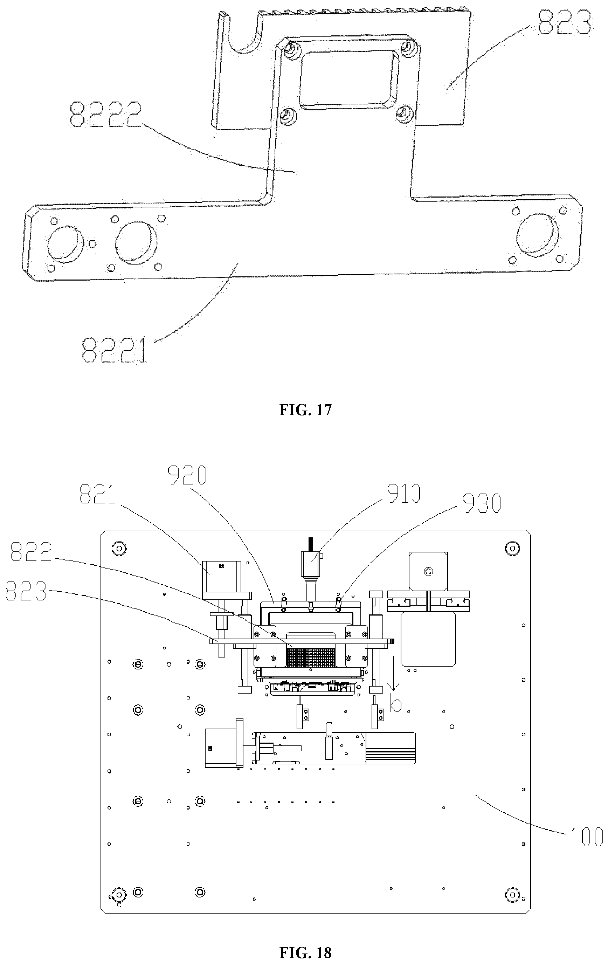

Referring to FIG. 18, after the chip 2000 is disposed on the analysis station, the baffle 920 is positioned at the initial position, and the side edges of the baffle 920 prevent the chip 2000 from falling. After the analysis of the chip 2000 is completed, the baffle 920 moves in the direction b. After the chip 2000 is no longer blocked by the baffle 920, the chip falls into the recovery station. Then, the baffle 920 moves in the direction opposite to the direction b and returns to the initial position to prevent the next chip 2000 from falling.

The first elastic member 930 is a tension spring. One end of the tension spring is connected to a position below the bottom plate 100 and adjacent to the first cavity 110, and the other end of the tension spring is connected to the baffle 920. The tension spring provides a force urging the baffle 920 toward the bottom plate 100. As shown in FIG. 18, the tension spring provides a force urging the baffle 920 toward the direction opposite to the direction b.

When the baffle 920 moves in the direction opposite to the direction b and returns to the initial position, due to the driving precision limitations of the second driving member 910, the baffle 920 may fail to return precisely to the initial position. If the next chip 2000 is transferred to the analysis station, the bottom portion of the chip 2000 is relatively thin, which may cause the chip 2000 to fall into the gap, ultimately preventing analysis of the next chip 2000. Therefore, in the present disclosure, the first elastic member 930 is provided, and the first elastic member 930 applies a force to the baffle 920, thereby ensuring that the baffle 920 returns precisely to the initial position, and then the baffle 920 can successfully prevent the next chip 2000 from falling.

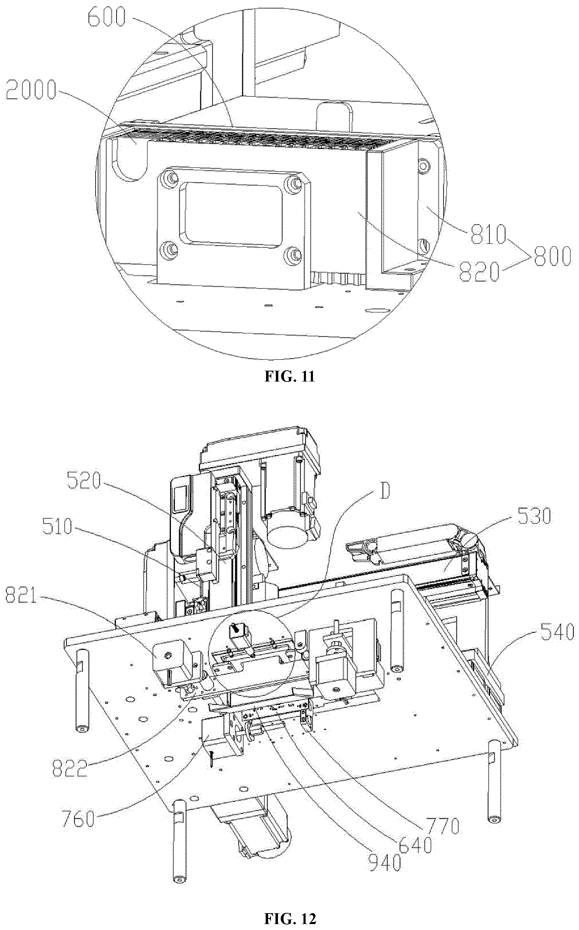

In some specific embodiments of the present disclosure, referring to FIGs. 10 and 12, the blocking mechanism 900 further includes a bent plate 940 with a certain bending angle, which is disposed in the first cavity 110 and corresponds to the position of the analysis station. When the chip 2000 falls, the chip falls along the bent plate 940 into the recovery station.

Fixing holes are formed on two sides of the bent plate 940. Screws pass through the fixing holes to secure the bent plate to the inner wall of the first cavity 110, such that the bent plate 940 can be fixedly connected to the inner wall of the first cavity 110.

The bent plate 940 is made of materials resistant to deformation, such as iron, steel, or aluminum alloy.

The bent plate 940 includes a first surface and a second surface, and a certain bending angle is formed between the first surface and the second surface, such as 50° , 60° , 70° , or other angles. After completion of sample analysis of the chip 2000, the second driving member 910 drives the baffle 920 to move, such that the chip 2000 is no longer blocked by the baffle 920 and starts to fall. The chip 2000 first falls to the first surface and then falls into the recovery station along the first surface and the second surface, or the chip first falls to the second surface and then falls into the recovery station along the second surface.

The bent plate 940 can provide a guiding function to a certain extent, ensuring that the chip 2000 falls smoothly into the recovery station. In addition, the bent plate 940 can provide a buffering effect to a certain extent, thus preventing damage to the chip 2000 when the chip 2000 falls into the recovery station from top to bottom, and preventing leakage of the sample in the chip 2000.

In some specific embodiments of the present disclosure, the recovery station is provided with a waste chip bin. After completion of sample analysis of the chip 2000, the blocking mechanism 900 moves, and the chip 2000 falls into the waste chip bin at the recovery station. After completion of analysis of all chips 2000 or after a certain time period, the user may retrieve the analyzed chips 2000 in the waste chip bin.

In some specific embodiments of the present disclosure, referring to FIGs. 10 to 13 and 16 to 18, the chip fixing mechanism 800 includes:
a movable plate 810; and
a pushing mechanism 820 for providing a pushing force toward the chip 2000 placed on the movable plate 810, where the chip 2000 is placed tightly against the movable plate 810 under the pushing of the pushing mechanism 820.

In this embodiment, the chip 2000 is vertically disposed, and the chip 2000 is placed tightly against the movable plate 810 under the pushing of the pushing mechanism 820. One chip 2000 may be provided. One side of this chip 2000 receives a pushing force from the pushing mechanism 820, and the other side is subjected to the force from the movable plate 810, thereby positioning the chip 2000 at the analysis station. A plurality of chips 2000 may be provided, with the chips 2000 attached to each other. One of the chips 2000 in contact with the pushing mechanism 820 receives a pushing force from the pushing mechanism 820, while the other chip 2000 in contact with the movable plate 810 is placed tightly against the movable plate 810 under the pushing of the pushing mechanism 820. The chip 2000 that is placed tightly against the movable plate 810 is positioned at the analysis station.

The chip 2000 may be in a slightly inclined state when the chip 2000 is initially positioned at the analysis station. The pushing mechanism 820 provides a pushing force to the chip 2000. The chip 2000 is subjected to the pushing force on one side and the force from the movable plate 810 on the other side, causing the chip to slightly rotate to become vertically aligned and then be placed tightly against the movable plate 810. When one chip 2000 is provided, the chip 2000 is vertically placed. The pushing mechanism 820 provides a pushing force to one side of the chip 2000, while the other side of the chip 2000 is tightly against the movable plate 810. After completion of sample analysis of the chip 2000, the pushing mechanism 820 moves, and thus the chip 2000 loses the pushing force from the pushing mechanism 820 and enters a release state. The blocking mechanism 900 then moves, allowing the chip 2000 to fall into the recovery station. Then, the next chip 2000 is placed, and the analysis and recovery of the next chip 2000 are performed. When a plurality of chips 2000 are provided, these chips 2000 are vertically placed. The pushing mechanism 820 provides a pushing force to the chip 2000 in contact with the pushing mechanism, and the movable plate 810 provides a force to the chip 2000 in contact with the movable plate. The chips 2000 are tightly against each other, and the position of the chip 2000 adjacent to the movable plate 810 serves as the analysis station. After completion of sample analysis of the chip 2000 at the analysis station, the pushing mechanism 820 moves, and thus the chip 2000 at the analysis station enters a release state. The blocking mechanism 900 moves, allowing the chip 2000 at the analysis station to fall into the recovery station. The blocking mechanism 900 moves and returns to the initial position, and the pushing mechanism 820 moves again, thereby causing the rest of the chips 2000 to be tightly against each other and moving the next chip 2000 to the analysis station. The above operations are repeated to complete the analysis and recovery of the next chip 2000. After completion of analysis and recovery of all the chips 2000, the next batch of chips 2000 is placed, and the analysis and recovery of the next batch of chips 2000 are performed.

In other embodiments, the chip fixing mechanism 800 may also adopt other structural designs. For example, the chip fixing mechanism 800 is a gripper and when the chip 2000 is positioned at the analysis station, the gripper grips the chip 2000 to secures the chip 2000; after completion of analysis of the chip 2000, the gripper releases the chip 2000, and the blocking mechanism 900 moves, allowing the chip 2000 at the analysis station to fall into the recovery station.

In some specific embodiments of the present disclosure, referring to FIGs. 10 to 13 and 16 to 18, the pushing mechanism 820 includes:
a third driving member 821 disposed below the bottom plate 100;
a pushing member 822 including a straight plate 8221 and a vertical plate 8222, where the straight plate 8221 is in a driving connection with the third driving member 821, one end of the vertical plate 8222 is in a fixed connection with the straight plate 8221, and the other end of the vertical plate passes through the first cavity 110; and
a pressing plate 823, where the pressing plate 823 is in a fixed connection with the vertical plate 8222 and is in contact with the chip 2000 placed on the movable plate 810, and the length of the pressing plate 823 is adapted to the length of the chip 2000.

The first cavity 110 includes a small cavity 111 and a large cavity. The small cavity 111 provides a movement space for the pushing member 822, the large cavity is disposed at the position corresponding to the analysis station, and the length of the large cavity is adapted to the length of the chip 2000.

To save space, the third driving member 821 is disposed below the bottom plate 100.

The third driving member 821 can drive the pushing member 822 to move. For example, the third driving member 821 is a motor, and the output shaft of the motor is connected to the straight plate 8221. When the motor operates, the output shaft drives the straight plate 8221 to move, thereby driving the entire pushing member 822 to move.

If the length of the pushing member 822 is set to be adapted to the length of the chip 2000, and the pushing member 822 directly contacts the chip 2000, the third driving member 821 is required to provide a large force to the pushing member 822, which may lead to unreliable movement, and may easily cause deviations during the movement of the chip 2000. Moreover, the pushing member 822 occupies a large movement space. As a result, the small cavity 111 is required to be configured with a relatively large width to provide sufficient movement space for the pushing member 822, thereby resulting in a relatively inefficient spatial arrangement.

Therefore, the pushing mechanism 820 provided by the present disclosure is provided with the pressing plate 823 fixedly connected to the pushing member 822. When the pushing member 822 moves, the pushing member 822 drives the pressing plate 823 to move, and the pressing plate 823 provides a pushing force to the chip 2000 in contact with the pressing plate. Since the length of the pressing plate 823 is adapted to the length of the chip 2000, the pressing plate 823 can provide a uniform force to the chip 2000, thereby avoiding deviations during the movement of the chip 2000. In addition, the pressing plate 823 moves above the bottom plate 100, and the pushing member 822 may be configured with a relatively small width that is only sufficient to drive the pressing plate 823 to move. This design eliminates the need for large movement space, and enables a more efficient spatial arrangement.

When the pushing member 822 pushes the chip 2000 to move through the pressing plate 823, the small cavity 111 provides a movement space for the pushing member 822, allowing the pushing member 822 to move in the small cavity 111. When the chip 2000 is positioned at the analysis station, the blocking mechanism 900 prevents the chip 2000 from falling. After completion of analysis of the chip 2000, the blocking mechanism 900 moves. Since the length of the large cavity is adapted to the length of the chip 2000, the chip 2000 can pass through the large cavity and fall into the recovery station.

The chip 2000 may be in a slightly inclined state when the chip 2000 is initially positioned at the analysis station. The third driving member 821 drives the pushing member 822 to move, and the pushing member 822 drives the pressing plate 823 to move. The pressing plate 823 provides a pushing force to the chip 2000. The chip 2000 is subjected to the pushing force on one side and the force from the movable plate 810 on the other side, causing the chip to slightly rotate to become vertically aligned and then be placed tightly against the movable plate 810.

When one chip 2000 is provided, the chip 2000 is vertically placed. The third driving member 821 drives the pushing member 822 to move, and the pushing member 822 drives the pressing plate 823 to move. The pressing plate 823 provides a pushing force to one side of the chip 2000, while the other side of the chip 2000 is tightly against the movable plate 810. After completion of sample analysis of the chip 2000, the third driving member 821 drives the pushing member 822 to move, and the pushing member 822 drives the pressing plate 823 to move. Thus, the chip 2000 loses the pushing force from the pressing plate 823 and enters a release state. The blocking mechanism 900 then moves, allowing the chip 2000 to fall into the recovery station. Then, the next chip 2000 is placed, and the analysis and recovery of the next chip 2000 are performed.

When a plurality of chips 2000 are provided, these chips 2000 are vertically placed. The third driving member 821 drives the pushing member 822 to move, and the pushing member 822 drives the pressing plate 823 to move. The pressing plate 823 provides a pushing force to the chip 2000 in contact with the pressing plate, and the movable plate 810 provides a force to the chip 2000 in contact with the movable plate. The chips 2000 are tightly against each other, and the position of the chip 2000 adjacent to the movable plate 810 serves as the analysis station. After completion of sample analysis of the chip 2000 at the analysis station, the third driving member 821 drives the pushing member 822 to move, and thus the chip 2000 at the analysis station enters a release state. The blocking mechanism 900 moves, allowing the chip 2000 at the analysis station to fall into the recovery station. The blocking mechanism 900 moves and returns to the initial position, the third driving member 821 drives the pushing member 822 to move again, and the pushing member 822 drives the pressing plate 823 to move, thereby causing the rest of the chips 2000 to be tightly against each other and moving the next chip 2000 to the analysis station. The above operations are repeated to complete the analysis and recovery of the next chip 2000. After completion of analysis and recovery of all the chips 2000, the next batch of chips 2000 is placed, and the analysis and recovery of the next batch of chips 2000 are performed.

The baffle 920 is designed in a square loop structure, with a through cavity disposed at the center. The side edges of the baffle 920 can prevent the chip 2000 from falling. When the vertical plate 8222 of the pushing member 822 passes through the first cavity 110, that is, passes through the through cavity of the baffle 920, the pushing member 822 can move freely without being affected by the baffle 920.

In some specific embodiments of the present disclosure, referring to FIGs. 10 to 13 and 16 to 18, the movable plate 810 includes through holes disposed on the first side and the second side. The electrophoresis mechanism 600 includes a fixed plate 610 and probes 620. The fixed plate 610 is disposed adjacent to the movable plate 810, a plurality of second elastic members 630 are disposed between the fixed plate 610 and the movable plate 810, the first side and the second side of the fixed plate 610 are provided with probe holes for accommodating the probes 620, and the probe holes and the through holes correspond to each other.

The large cavity includes a first sub-cavity and a second sub-cavity, and the analysis station includes a sample loading sub-station 1121 and an analysis sub-station 1122. The first sub-cavity is disposed at the position corresponding to the sample loading sub-station 1121, and the second sub-cavity is disposed at the position corresponding to the analysis sub-station 1122.

In some embodiments, the first side and the second side of the movable plate 810 are the upper side and the lower side of the movable plate 810, respectively; the first side and the second side of the fixed plate 610 are the upper side and the lower side of the fixed plate 610, respectively; the upper side of the movable plate 810 corresponds to the upper side of the fixed plate 610, and the lower side of the movable plate 810 corresponds to the lower side of the fixed plate 610.

The fixed plate 610 is fixedly disposed on the bottom plate 100 and is disposed adjacent to the movable plate 810. The probes 620 are fixedly disposed in the probe holes that are positioned on the first side and the second side of the fixed plate 610, and the probe holes correspond to the through holes.

The second elastic member 630 is a spring. When the movable plate 810 moves toward the fixed plate 610, the spring may enter a compressed state and respectively exerts forces toward the fixed plate 610 and the movable plate 810.

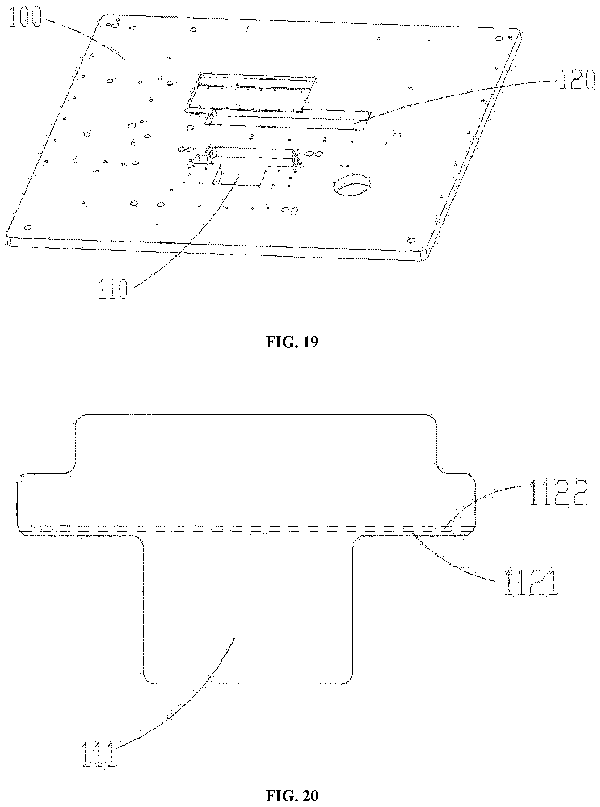

Referring to FIG. 20, the sample loading sub-station 1121 and the analysis sub-station 1122 are illustrated. When the chip 2000 is positioned at the sample loading sub-station 1121, the sample transfer mechanism 500 transfers the oscillated and centrifuged sample in the sample receptacle 321 of the centrifuge module 300 to the electrophoresis channel of the chip 2000. When the chip 2000 is positioned at the analysis sub-station 1122, the electrophoresis mechanism 600 performs electrophoretic separation on the chip 2000. After the electrophoretic separation is completed, the imaging mechanism 700 captures images of the chip 2000. It should be noted that the dashed lines in FIG. 20 do not exist in the actual product, but are marked to distinguish the sample loading sub-station 1121 and the analysis sub-station 1122 for illustrative purposes.

The third driving member 821 drives the pushing member 822 to move in the reverse direction, and the pushing member 822 drives the pressing plate 823 to move in the reverse direction. The second elastic member 630 pushes the movable plate 810, and the movable plate 810 pushes the chip 2000 to move in the reverse direction, thereby moving the chip 2000 to the sample loading sub-station 1121. The sample transfer mechanism 500 transfers the oscillated and centrifuged sample to the electrophoresis channel of the chip 2000, and the liquid overflowing from the electrophoresis channel enters the overflow cavity. The third driving member 821 drives the pushing member 822 to move, and the pushing member 822 drives the pressing plate 823 to move. The pressing plate 823 provides a pushing force to the chip 2000, thereby moving the chip 2000 to the analysis sub-station 1122. During the movement of the chip 2000, the chip 2000 compresses the movable plate 810, causing the movable plate 810 to move toward the fixed plate 610 and enabling the probes 620 to contact the chip 2000. The probes 620 apply voltage to the chip 2000 to enable electrophoretic separation of the sample in the chip 2000. In addition, the second elastic member 630 enters a compressed state, and the second elastic member 630 exerts a force to the movable plate 810 in a direction away from the fixed plate 610. After the electrophoretic separation of the sample is completed, the imaging mechanism 700 captures images of the sample. Then, the third driving member 821 drives the pushing member 822 to move in the reverse direction, and the pushing member 822 drives the pressing plate 823 to move, thereby releasing the chip 2000. The second elastic member 630 switches to a release state, and the chip 2000 is pushed to move in the reverse direction to the sample loading sub-station 1121. Finally, the second driving member 910 drives the baffle 920 to move, causing the chip 2000 to fall into the recovery station. The rest of the chips 2000, having moved away from their corresponding positions in the large cavity, are blocked by the bottom plate 100 and therefore do not fall.

Referring to FIG. 18, the analysis and recovery process of the chip 2000 is described in detail based on the direction shown in FIG. 18. The third driving member 821 drives the pushing member 822 to move toward the direction opposite to the direction b, and the pushing member 822 drives the pressing plate 823 to move toward the direction opposite to the direction b. The second elastic member 630 pushes the movable plate 810, and the movable plate 810 pushes the chip 2000 to move toward the direction opposite to the direction b, thereby moving the chip 2000 to the sample loading sub-station 1121. The sample transfer mechanism 500 transfers the oscillated and centrifuged sample to the electrophoresis channel of the chip 2000, and the liquid overflowing from the electrophoresis channel enters the overflow cavity. The third driving member 821 drives the pushing member 822 to move toward the direction b, and the pushing member 822 drives the pressing plate 823 to move toward the direction b. The pressing plate 823 provides a pushing force to the chip 2000, thereby moving the chip 2000 to the analysis sub-station 1122. During the movement of the chip 2000, the chip 2000 compresses the movable plate 810 toward the direction b, causing the movable plate 810 to move toward the fixed plate 610 and enabling the probes 620 to contact the chip 2000. The probes 620 apply voltage to the chip 2000 to enable electrophoretic separation of the sample in the chip 2000. **In** addition, the second elastic member 630 enters a compressed state, and the second elastic member 630 exerts a force to the movable plate 810 in the direction opposite to the direction b. After the electrophoretic separation of the sample is completed, the imaging mechanism 700 captures images of the sample. Then, the third driving member 821 drives the pushing member 822 to move toward the direction opposite to the direction b, and the pushing member 822 drives the pressing plate 823 to move toward the direction opposite to the direction b, thereby releasing the chip 2000. The second elastic member 630 switches to a release state, and the chip 2000 is pushed to move toward the direction opposite to the direction b to the sample loading sub-station 1121. Finally, the second driving member 910 drives the baffle 920 to move toward the direction b, causing the chip 2000 to fall into the recovery station. The rest of the chips 2000, having moved away from their corresponding positions in the large cavity, are blocked by the bottom plate 100 and therefore do not fall. After the recovery of the chip 2000 is completed, the second driving member 910 drives the baffle 920 to move toward the direction opposite to the direction b, and the pushing mechanism 820 drives the next chip 2000 to the sample loading sub-station 1121, so as to perform the analysis and recovery of the next chip 2000.

It should be noted that during the analysis and recovery process of the chip 2000, the chip 2000 is positioned at the sample loading sub-station 1121, and the chip 2000 does not drive the movable plate 810 to move. Since the movable plate 810 does not compress the fixed plate 610, contact between the probes 620 and the chip 2000 can be avoided. In addition, when the chip 2000 undergoes sample loading at the sample loading sub-station 1121 and analysis at the analysis sub-station 1122, the blocking mechanism 900 provides a blocking function for the chip 2000 in both cases. When the second elastic member 630 switches to a release state, and the movable plate 810 pushes the chip 2000 to transfer back to the sample loading sub-station 1121, the chip 2000 pushes the rest of the chips 2000 to move, causing the rest of the chips 2000 to move away from their corresponding positions in the large cavity. Then, the blocking mechanism 900 moves, allowing the chip 2000 positioned at the sample adding sub-station 1121 to fall into the recovery station. The rest of the chips 2000, having moved away from their corresponding positions in the large cavity, are blocked by the bottom plate 100 and therefore do not fall.

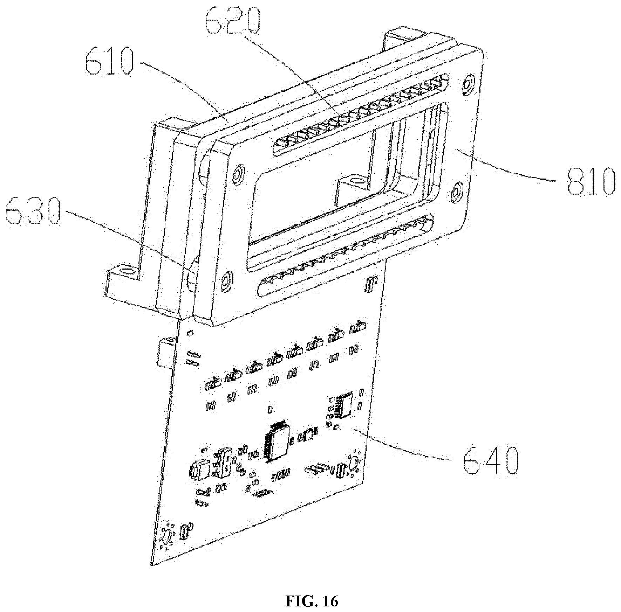

Further, referring to FIG. 16, the electrophoresis mechanism 600 further includes an electrophoresis circuit board 640. The electrophoresis circuit board 640 is disposed tightly against the fixed plate 610 and passes through the first cavity 110, extending below the bottom plate 100. Since the electrophoresis mechanism 600 requires a relatively large number of probes 620, the electrophoresis circuit board 640 is disposed tightly against the fixed plate 610 to enable contact with the probes 620, thereby avoiding excessive wiring and effectively saving space.

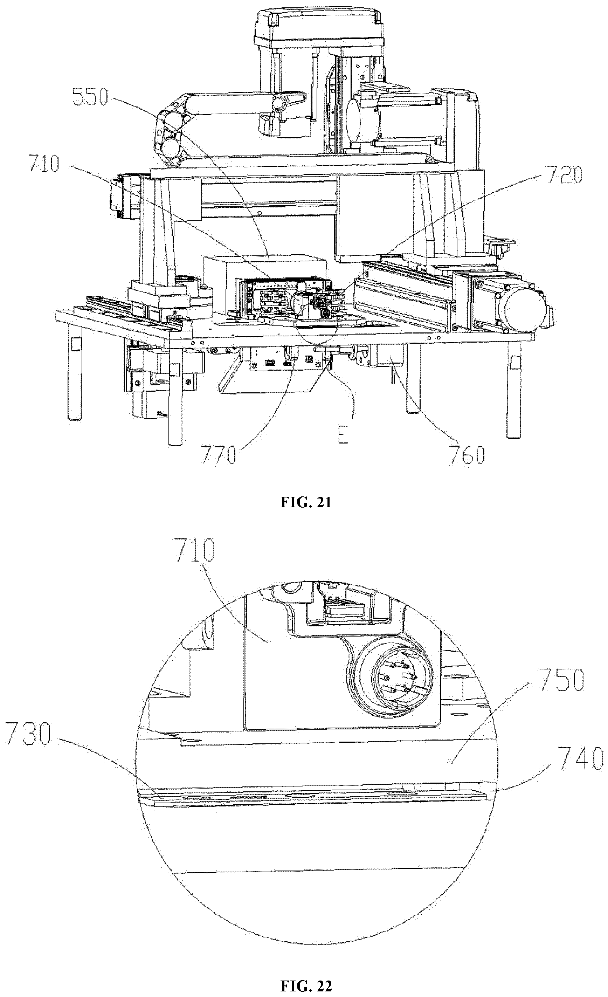

In some specific embodiments of the present disclosure, referring to FIG. 21, the imaging mechanism 700 includes a camera 710 and at least one light source 720, both disposed on the bottom plate 100.

It should be noted that FIG. 10 illustrates a protective cover for protecting the imaging mechanism 700, while in FIG. 21, the protective cover is omitted to clearly illustrate the structures such as the camera 710 and the light source 720.

When the chip 2000 is positioned at the analysis station, the electrophoresis mechanism 600 performs electrophoretic separation on the sample in the chip 2000. After the electrophoretic separation is completed, the light source 720 provides light, and the camera 710 captures images of the sample in the chip 2000. After the images of the sample are obtained, the images are analyzed.

In this embodiment, two light sources 720 are provided, each emitting light of a different wavelength. In some embodiments, one of the light sources 720 emits light of a first wavelength to excite a first optically detectable label on the nucleic acid sample to generate a first optical signal, and the camera 710 captures images of the nucleic acid sample by collecting the first optical signal; the other light source 720 emits light of a second wavelength to excite a second optically detectable label on the ladder to generate a second optical signal, and the camera 710 captures images of the ladder by collecting the second optical signal. The first optically detectable label and the second optically detectable label may be identical or different.

In some specific embodiments of the present disclosure, referring to FIGs. 19, 21, and 22, the bottom plate 100 is provided with a second cavity 120. The imaging mechanism 700 includes a second guide rail 730 disposed on the bottom plate 100, a carrier plate 750 disposed on the second guide rail 730, a fourth driving member 760 disposed below the bottom plate 100, and a second connecting plate 770 having one end connected to the fourth driving member 760 and the other end extending through the second cavity 120 to connect to the carrier plate 750. Under the driving action of the fourth driving member 760, the second connecting plate 770 drives the carrier plate 750 to move on the second guide rail 730. The camera 710 and the light source 720 are disposed on the carrier plate 750.

To save space, the fourth driving member 760 is disposed below the bottom plate 100.

The fourth driving member 760 can drive the second connecting plate 770 to move. For example, the fourth driving member 760 is a motor, and the output shaft of the motor is connected to the second connecting plate 770. When the motor operates, the output shaft drives the second connecting plate 770 to move.

A second guide block 740 may be provided on the second guide rail 730, and the carrier plate 750 is disposed on the second guide block 740. When the fourth driving member 760 drives the carrier plate 750 to move, the carrier plate 750 drives the second guide block 740 to move on the second guide rail 730.

The fourth driving member 760 drives the second connecting plate 770 to move, the second connecting plate 770 drives the carrier plate 750 to move on the second guide rail 730, and the carrier plate 750 drives the camera 710 and the light source 720 to move, enabling the camera 710 to capture images of different positions of the chip 2000.

In this embodiment, a plurality of electrophoresis channels are provided in the chip 2000, and each electrophoresis channel can accommodate one sample. For example, 16 electrophoresis channels are provided to correspondingly accommodate 16 samples. The fixed plate 610 is provided with one probe 620 above and below each electrophoresis channel, respectively, resulting in a total of 32 probes 620. These probes 620 can simultaneously perform electrophoretic separation on the samples in the electrophoretic channels. After the electrophoretic separation is completed, the camera 710 captures images of the samples in some of the electrophoresis channels. For example, images of the samples in three of the electrophoresis channels are captured. Under the driving action of the fourth driving member 760, the camera 710 moves to capture images of the samples in other electrophoresis channels. For example, images of the samples in another three electrophoretic channels are captured. The camera 710 moves multiple times as described above until images of all the samples that have undergone electrophoretic separation are captured, thereby completing the analysis of all the samples.

Since the imaging range of the camera 710 is limited, the movement of the carrier plate 750 driven by the fourth driving member 760 also enables the camera 710 to move, thereby ensuring that the camera 710 can capture images of the samples in all the electrophoresis channels.

In some specific embodiments of the present disclosure, referring to FIG. 12, the sample transfer mechanism 500 includes a first motion assembly 540 disposed on the bottom plate, a second motion assembly 530 disposed on the first motion assembly 540, a third motion assembly 520 disposed on the second motion assembly 530, and a sample loader 510 disposed on the third motion assembly 520.

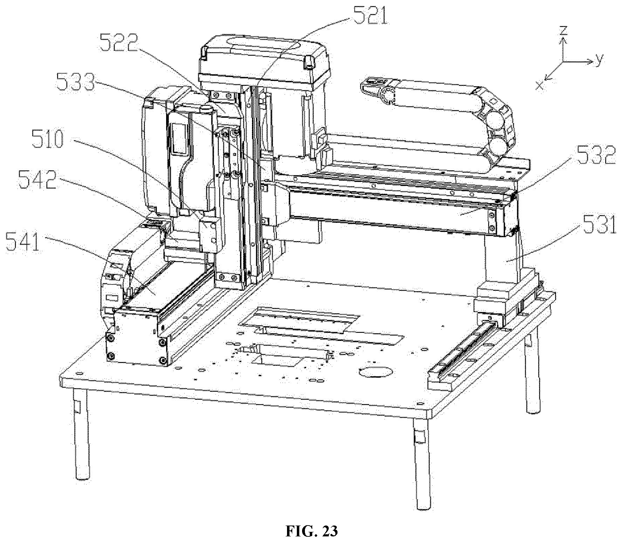

The first motion assembly 540 drives the second motion assembly 530, the third motion assembly 520, and the sample loader 510 to move toward the first direction, the second motion assembly 530 drives the third motion assembly 520 and the sample loader 510 to move toward the second direction, and the third motion assembly 520 drives the sample loader 510 to move toward the third direction. As shown in FIG. 23, the x direction refers to the first direction, the y direction refers to the second direction, and the z direction refers to the third direction.

In some specific embodiments of the present disclosure, referring to FIG. 23, the first motion assembly 540 includes third guide rails 541 disposed on both sides of the bottom plate 100, third guide blocks 542 disposed on the third guide rails 541 respectively, and a fifth driving member in a driving connection with the third guide blocks 542. The second motion assembly 530 includes a movable plate 531 disposed between the third guide blocks 542, a fourth guide rail 532 disposed on the movable plate 531, a fourth guide block 533 disposed on the fourth guide rail 532, and a sixth driving member in a driving connection with the fourth guide blocks 533. The third motion assembly 520 includes a fifth guide rail 521 disposed on the fourth guide block 533, a fifth guide block 522 disposed on the fifth guide rail 521, and a seventh driving member in a driving connection with the fifth guide block 522. The sample loader 510 is disposed on the fifth guide block 522, and the sample loader 510 includes a puncture needle and a sample loading needle.

Under the driving action of the fifth driving member, the third guide blocks 542 move on the third guide rails 541, thereby enabling the puncture needle and the sample loading needle to move in the first direction. Under the driving action of the sixth driving member, the fourth guide block 533 moves on the fourth guide rail 532, thereby enabling the puncture needle and the sample loading needle to move in the second direction. Under the driving action of the seventh driving member, the fifth guide block 522 moves on the fifth guide rail 521, thereby enabling the puncture needle and the sample loading needle to move in the third direction. Therefore, the requirement for multidimensional motion of the puncture needle and the sample loading needle is satisfied, which ensures that the oscillated and centrifuged sample can be transferred into the chip 2000.

In some specific embodiments of the present disclosure, referring to FIG. 21, the sample transfer mechanism 500 further includes a tip storage 550 disposed on the bottom plate 100. The tip storage 550 is provided with a plurality of first storage chambers for storing new tips and at least one second storage chamber for storing used tips. The second storage chamber is provided with a clamping slot to facilitate the removal of the used tip from the sample loading needle and allow the tip to fall into the second storage chamber.

It should be noted that FIG. 21 illustrates the tip storage 550, while the tip storage 550 is omitted in FIGs. 10 and 12 to clearly illustrate the structures such as the chip 2000, the chip fixing mechanism 800, and the sample transfer mechanism 500.

The tip is a tip head. After the tip head is mounted onto the sample loading needle, the oscillated and centrifuged sample can be extracted from the sample receptacle 321 of the centrifuge module 300 and loaded into the electrophoresis channel of the chip 2000.

The workflow of the puncture needle and the sample loading needle is described in detail here. When the oscillation and centrifugation of the sample are completed and the chip 2000 is positioned at the analysis station, the sample loader 510 moves above the first storage chamber of the tip storage 550, and then the sample loader 510 moves downward to mount the tip onto the sample loading needle. The sample loader 510 moves upward and then to a position above the sample receptacle 321 of the centrifuge module 300. The sample loader 510 then moves downward to extract the sample from the sample receptacle 321. The sample loader 510 moves upward and then to a position above the chip 2000. In this case, the puncture needle is positioned above the electrophoresis channel of the chip 2000 that requires sample loading. The sample loader 510 then moves downward, enabling the puncture needle to pierce the chip 2000 and compress the electrophoresis channel, thereby causing the liquid inside the electrophoresis channel to overflow into the overflow cavity. The sample loader 510 then moves upward and slightly shifts. In this case, the sample loading needle is positioned above the electrophoresis channel of the pierced chip 2000. The sample loader 510 moves downward to load the sample into the electrophoresis channel, and the sample compresses the electrophoresis channel, thereby causing the liquid inside the electrophoresis channel to overflow into the overflow cavity. The sample loader 510 moves upward and then to a position above the second storage chamber of the tip storage 550. The sample loader 510 moves downward to insert the tip into the clamping slot, and then the sample loader 510 moves upward to remove the tip from the sample loading needle and allow it to fall into the second storage chamber. In other embodiments, the above steps may be interchanged. For example, the tip may be mounted onto the sample loading needle after piercing, followed by sample collection, loading, and tip removal; or the tip may be mounted onto the sample loading needle before piercing, followed by sample collection, loading, and tip removal.

In the description of this specification, the description of the terms "one embodiment", "some embodiments", "schematic embodiments", "examples", "certain examples", "specific examples", or the like, means that the particular features, structures, materials, or characteristics described with reference to the embodiment or example are included in at least one embodiment or example of the present disclosure. In the specification, the schematic description of the aforementioned terms does not necessarily refer to the same embodiment or example. Moreover, the specific feature, structure, material, or characteristic described may be combined in any one or more embodiments or examples in an appropriate manner.

Although the embodiments of the present disclosure have been illustrated and described above, it will be appreciated that the aforementioned embodiments are exemplary and should not be construed as limiting the present disclosure, and that those of ordinary skills in the art can make changes, modifications, replacements, and variations to such embodiments, without departing from the scope of the present disclosure.

## Claims

1. A chip, comprising:
a cover plate;
a substrate disposed on the cover plate; and
an overflow cavity and an electrophoresis channel disposed between the cover plate and the substrate, wherein the overflow cavity is disposed adjacent to the electrophoresis channel; a sample transfer mechanism for loading a sample enters the substrate, and then passes through the overflow cavity and enters the electrophoresis channel, and liquid overflowing from the electrophoresis channel enters the overflow cavity.

2. The chip according to claim 1, wherein the overflow cavity is disposed within the substrate, and the electrophoresis channel is formed between the cover plate and the substrate.

3. The chip according to claim 1, wherein the electrophoresis channel is disposed on the cover plate, and the overflow cavity is formed between the cover plate and the substrate.

4. The chip according to claim 1, wherein the overflow cavity comprises a first surface and a second surface opposite to the first surface; the sample transfer mechanism enters the substrate, and then sequentially penetrates through the first surface and the second surface, and enters the electrophoresis channel, and the liquid overflowing from the electrophoresis channel enters between the first surface and the second surface.

5. The chip according to claim 4, wherein the first surface and the second surface each have a thickness of greater than 0.2 mm.

6. The chip according to claim 4, wherein a volume of the overflow cavity is greater than a sum of a volume occupied by a puncture needle of the sample transfer mechanism entering the electrophoresis channel and a first margin.

7. The chip according to claim 4, wherein shortest sides of the first surface and the second surface are both greater than a sum of an aperture of a puncture needle of the sample transfer mechanism, twice a positioning deviation of the sample transfer mechanism, and a second margin.

8. The chip according to claim 4, wherein the overflow cavity further comprises a third surface, the third surface is connected to both the first surface and the second surface, the third surface is provided with a first opening, and a film is disposed on the first opening to seal the first opening.

9. The chip according to claim 8, wherein the first surface is provided with a second opening, and the film extends from the first opening to the second opening to seal both the first opening and the second opening.

10. The chip according to claim 9, wherein a plurality of electrophoresis channels are provided, and each electrophoresis channel is provided with a corresponding overflow cavity; the film is a single film, and the single film is configured to seal all of the first openings and the second openings.

11. The chip according to claim 1, wherein a first conductive structure and a second conductive structure are disposed on the cover plate, and the first conductive structure and the second conductive structure are respectively positioned at two ends of the electrophoresis channel.

12. The chip according to claim 11, wherein the first conductive structure comprises a first contact point end, a first contact end, and a first connection end connecting the first contact point end and the first contact end, and the first contact end contacts the corresponding electrophoresis channel; the second conductive structure comprises a second contact point end, a second contact end, and a second connection end connecting the second contact point end and the second contact end, and the second connection end contacts the corresponding electrophoresis channel; the cover plate or the substrate is provided with puncture holes corresponding to the first contact point end and the second contact point end.

13. The chip according to claim 1, wherein the electrophoresis channel comprises an intermediate channel, and a first channel and a second channel disposed at both ends of the intermediate channel, the first channel being disposed adjacent to the overflow cavity.

14. The chip according to claim 13, wherein in a direction perpendicular to a line connecting centers of the first channel, the intermediate channel, and the second channel, a cross-sectional width of the first channel and a cross-sectional width of the second channel are both greater than a cross-sectional width of the intermediate channel; and/or
in a direction perpendicular to a line connecting centers of the first channel, the intermediate channel, and the second channel, a cross-sectional width of the first channel facing the intermediate channel is initially equal and then gradually decreases, and a cross-sectional width of the second channel facing the intermediate channel is initially equal and then gradually decreases.

15. A sample analysis device, comprising the chip according to any one of claims 1 to 14, and the sample analysis device further comprising:
a bottom plate provided with a first cavity;
a chip fixing mechanism disposed on the bottom plate, the chip fixing mechanism comprising at least one analysis station positioned in the first cavity;
a sample transfer mechanism disposed on the bottom plate;
an electrophoresis mechanism and an imaging mechanism disposed on the bottom plate; and
a blocking mechanism disposed in the first cavity and corresponding to a position of the analysis station, the blocking mechanism comprising at least one recovery station,
wherein when the chip is positioned on the analysis station, the chip fixing mechanism secures the chip, the blocking mechanism prevents the chip from falling, the sample transfer mechanism loads a sample into the electrophoresis channel, then the electrophoresis mechanism performs electrophoretic separation on the sample in the electrophoresis channel, the imaging mechanism captures images of the sample, and finally the chip fixing mechanism releases the chip, and the blocking mechanism moves to allow the chip to fall into the recovery station.
